# EUROPEAN PATENT SPECIFICATION

(11) **EP 4 521 281 B1**
(45) Date of publication and mention of the grant of the patent: **12.08.2026**
(21) Application number: 24199702.2
(22) Date of filing: 11.09.2024
(51) Int. Cl.: G06F 21/60, G06F 21/44, G06F 21/64, G03G 15/00, H04N 1/00, B41J 2/175

(54) **DATA VERIFICATION METHOD, INFORMATION PROCESSING APPARATUS, CONSUMABLE AND IMAGE-FORMING APPARATUS**
DATENVERIFIZIERUNGSVERFAHREN, INFORMATIONSVERARBEITUNGSVORRICHTUNG, VERBRAUCHSMATERIAL UND BILDERZEUGUNGSVORRICHTUNG
PROCÉDÉ DE VÉRIFICATION DE DONNÉES, APPAREIL DE TRAITEMENT D'INFORMATIONS, CONSOMMABLE ET APPAREIL DE FORMATION D'IMAGE

(30) Priority: 11.09.2023 CN 202311170580; 06.09.2024 CN 202411253078
(43) Date of publication of application: 12.03.2025
(73) Proprietor: Zhuhai Pantum Electronics Co., Ltd., Zhuhai, Guangdong (CN)
(72) Inventor: LI, Haixiong, Zhuhai, Guangdong (CN); NING, Dan, Zhuhai, Guangdong (CN); ZHANG, Hao, Zhuhai, Guangdong (CN)
(74) Representative: Sun, Yiming

(56) References cited:
- JP-A- 2009 014 991
- US-A1- 2011 074 850
- US-A1- 2022 083 665

## Description

### TECHNICAL FIELD

The present disclosure generally relates to the field of image-forming technology and, more particularly, relates to a data verification method, an information processing apparatus, a consumable, and an image-forming apparatus.

### BACKGROUND

With development of printing and image-forming technology, image-forming apparatuses such as printers, copiers, fax machines, word processors and the like have been widely used. For ease of use, image-forming apparatuses are disposed with consumables that are convenient for users to replace. For example, the consumables may include consumable cartridges (such as ink cartridges, toner cartridges, process cartridges and the like) for containing recording materials (such as ink, toner and the like). When the recording material in the consumable cartridge is exhausted, the user only needs to replace the consumable cartridge, and the image-forming apparatus can continue to operate. An image-forming system may include an image-forming apparatus and consumables.

In order to facilitate consumable management, a information processing apparatus may be disposed on the consumable, for example, the information processing apparatus is a consumable chip. In the information processing apparatus, information (referring to original data) related to the image-forming system may be stored and include image-forming control related parameters and consumable related parameters. In order to ensure the security of the original data stored in the information processing apparatus, the original data may be verified using verification information calculated by existing algorithms such as sha-512. However, the data length of the verification information in above verification method may be relatively long, and communication efficiency between the image-forming apparatus and the consumable may be relatively low. Relatively long time may be needed to transmit the verification information, such that the image-forming apparatus may take relatively long time to complete the verification of the original data and then process the next task or enter the next stage (such as entering the print ready state, the print engine rubbing paper, rendering the received image, etc.), which may lead to problems such as untimely task processing and high system overhead.. When the image-forming apparatus enters the ready state, the image-forming apparatus may immediately perform the image-forming operation after receiving data to-be-printed.

It should be noted that the information disclosed in the background technology section of the present disclosure is only intended to deepen the understanding of background technology of the present disclosure, and should not be regarded as an admission or suggestion in any form that such information belongs to the existing technology known to those skilled in the art.

Document JP2009014991A discloses an image-forming apparatus configured to verify the integrity of consumable-related parameters received from a consumable chip using a hashing algorithm.

### SUMMARY

First aspect of the present disclosure provides a data verification method. The method includes
receiving a verification request sent by an image-forming apparatus;
and sending the original data and the target verification information to the image-forming apparatus based on the verification request, where at least partial data in the target verification information is configured to verify the original data;
before sending target verification information to the image-forming apparatus based on the verification request, the method further includes:
   sending a first calculation factor to the image-forming apparatus based on the verification request;
   receiving first intermediate data generated based on the first calculation factor and sent by the image-forming apparatus;
   generating target verification information based on the first intermediate data, where a data length of the target verification information is shorter than a data length of first verification information generated based on original data according to a preset first algorithm.

Second aspect of the present disclosure provides a data verification method, applied to an image-forming apparatus, where a consumable is installed on the image-forming apparatus.

The method includes sending a verification request to the consumable;
receiving original data, target verification information and a first calculation factor sent by the consumable;
generating first intermediate data based on the first calculation factor, and sending the first intermediate data to the consumable;
generating second verification information based on the original data according to a preset first algorithm;
selecting partial data in the second verification information based on the first intermediate data;
generating reference verification information based on the selected partial data in the second verification information;
and comparing the target verification information and the reference verification information; if the target verification information is consistent with the reference verification information, determining the original data passes verification; and if the target verification information is not consistent with the reference verification information, determining the original data does not pass verification.

Third aspect of the present disclosure provides an information processing apparatus, where a control apparatus is capable of communicating with an image-forming apparatus, the image forming apparatus being detachably installed with a consumable.

The apparatus includes a first receiving module, configured to receive a verification request sent by the image-forming apparatus;
a first output module, configured to send original data and target verification information to the image-forming apparatus based on the verification request, where at least partial data in the target verification information is configured to verify the original data;
a second output module, configured to feed back a first calculation factor based on the verification request;
a second receiving module, configured to send the first calculation factor to the image-forming apparatus based on the verification request;
a second receiving module, configured to receive first intermediate data generated based on the first calculation factor and sent by the image-forming apparatus;
and a generating module, configured to generate the target verification information based on the first intermediate data, where a data length of the target verification information is shorter than a data length of first verification information generated based on the original data according to a preset first algorithm.

Fourth aspect of the present disclosure provides a consumable, including
a housing;
a developer accommodating portion in the housing, for containing a developer;
and an information processing apparatus according to any above-mentioned embodiments.

Fifth aspect of the present disclosure provides a consumable, including a
photosensitive drum;
a charging roller for charging the photosensitive drum;
and an information processing apparatus according to any above-mentioned embodiments.

Sixth aspect of the present disclosure provides an image-forming apparatus, including
a second controller, configured to execute the method according to any above-mentioned embodiments.

Seventh aspect of the present disclosure provides an image-forming apparatus, including
the consumables according to fourth or fifth aspect above-mentioned ;
and the image-forming apparatus according to sixth aspect above-mentioned ,
where the image-forming apparatus and the information processing device are communicatively connected to each other.

Other aspects of the present disclosure may be understood by those skilled in the art in light of the description, the claims, and the drawings of the present disclosure.

### BRIEF DESCRIPTION OF THE DRAWINGS

To clearly describe technical solutions of various embodiments of the present disclosure, the drawings which need to be used for describing various embodiments are described below. Obviously, the drawings in the following description are merely some embodiments of the present disclosure. For those skilled in the art, other drawings may be obtained in accordance with the drawings without creative efforts.
FIG. 1 illustrates a structural block diagram of an image-forming system provided by exemplary embodiments of the present disclosure.
FIG. 2 illustrates another structural block diagram of an image-forming system provided by exemplary embodiments of the present disclosure.
FIG. 3 illustrates another structural block diagram of an image-forming system provided by exemplary embodiments of the present disclosure.
FIG. 4 illustrates a structural schematic of an image-forming apparatus provided by exemplary embodiments of the present disclosure.
FIG. 5 illustrates a flowchart of a data verification method provided by exemplary embodiments of the present disclosure.
FIG. 6 illustrates another flowchart of a data verification method provided by exemplary embodiments of the present disclosure.
FIG. 7 illustrates another flowchart of a data verification method provided by exemplary embodiments of the present disclosure.
FIG. 8 illustrates another flowchart of a data verification method provided by exemplary embodiments of the present disclosure.
FIG. 9 illustrates another flowchart of a data verification method provided by exemplary embodiments of the present disclosure.
FIG. 10 illustrates a structural block diagram of a consumable chip provided by exemplary embodiments of the present disclosure.
FIG. 11 illustrates a structural schematic of a consumable provided by exemplary embodiments of the present disclosure.
FIG. 12 illustrates a structural schematic of another consumable provided by exemplary embodiments of the present disclosure.
FIG. 13 illustrates a structural schematic of another consumable provided by exemplary embodiments of the present disclosure.
FIG. 14 illustrates a structural schematic of another consumable provided by exemplary embodiments of the present disclosure.
FIG. 15 illustrates a structural schematic of another consumable provided by exemplary embodiments of the present disclosure.
FIG. 16 illustrates a structural schematic of another consumable provided by exemplary embodiments of the present disclosure.
FIG. 17 illustrates a structural schematic of another consumable provided by exemplary embodiments of the present disclosure.
FIG. 18 illustrates a structural schematic of another consumable provided by exemplary embodiments of the present disclosure.
FIG. 19 illustrates a structural block diagram of an image-forming apparatus provided by exemplary embodiments of the present disclosure.

### DETAILED DESCRIPTION

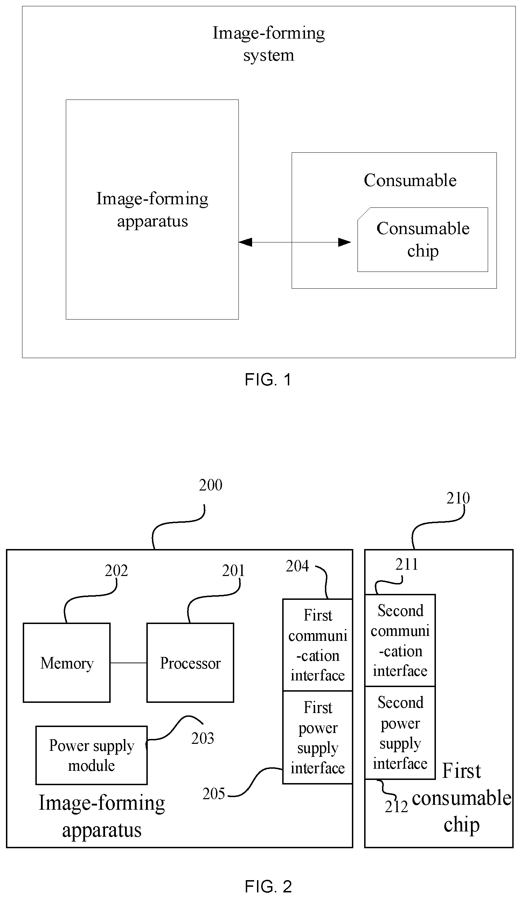

Referring to FIG. 1, FIG. 1 illustrates a structural block diagram of an image-forming system provided by exemplary embodiments of the present disclosure. As shown in FIG. 1, the image-forming system may include an image-forming apparatus and a consumable. The image-forming apparatus may be the part of the image-forming system that performs the image-forming operation, and the consumable may be replaceable accessory in the image-forming system. For example, when the image-forming apparatus is an inkjet printer, a laser printer, a 3D printer, a label printer or a dot matrix printer, the consumable may be an ink cartridge, a toner cartridge, a process cartridge, a toner bin, a ribbon cartridge or the like.

In an optional implementation manner, the consumable may be a split structure, including a drum cartridge and a developing cartridge that are detachable from each other, where the drum cartridge may include a photosensitive drum and a charging roller; and the developing cartridge may include a developer accommodating portion, a developing roller and a developer conveying unit. In another optional implementation manner, the consumable may be an integrated structure. For example, the consumable may include a developer accommodating portion, a developing roller, a developer conveying unit, a photosensitive drum, a charging roller and the like.

Furthermore, the consumable may also include only a housing and a developer accommodating portion. It should be additionally noted that the consumable may also be above-mentioned developing cartridge or drum cartridge. The developer accommodating portion may be configured to contain developer such as toner; and the developer conveying unit may be a component such as a toner conveying roller and a toner conveying screw for stirring and/or conveying toner. Obviously, above-mentioned developing cartridge may also only include above-mentioned developer accommodating portion, which may not be limited herein. Furthermore, above-mentioned developing cartridge may also only include the developer accommodating portion and the developer conveying unit mentioned above, which may not be limited herein.

In an optional implementation manner, the consumables may also include a toner bin and/or an image-forming assembly. The toner bin may be configured to deliver toner to the image-forming assembly when the toner contained in the image-forming assembly is insufficient, such that the image-forming apparatus may form images based on the toner delivered by the image-forming assembly. When the consumable is a toner bin, the consumable may include only a housing and a developer accommodating portion; or may include a housing, a developer accommodating portion, and a developer conveying unit, which may not be limited in the present disclosure. When the consumable is the image-forming assembly, the consumable may include a housing, a developer accommodating portion, a developer delivery unit, a charging roller, a photosensitive drum and the like, which may not be limited in embodiments of the present disclosure.

It should be noted that the consumables mentioned in embodiments of the present disclosure may also be other easily damaged components, parts, units (such as paper boxes and the like) in the image-forming apparatus that need to be replaced, which may also belong to the technical solutions corresponding to the consumables protected by the present disclosure.

In order to facilitate consumable management, the consumable may be used in conjunction with the consumable chip; and the consumable chip may be an electronic device with storage function. The consumable chip may also include other components that can be used for information processing, including a first controller (e.g., a microcontroller unit (MCU)). In one embodiment, the consumable chip may be installed on the consumable. The consumable chip may be installed on the consumable before the consumable is shipped, or installed on the consumable by the user after the consumable is shipped. In another embodiment, the consumable chip may not need to be installed on the consumable but may be fixed to the image-forming apparatus by an installation part or adhesive. When the consumable is used by the image-forming apparatus, the contacts of the consumable chip may be in electrical contact with the contact terminals corresponding to the image-forming apparatus, thereby realizing the electrical connection between the consumable chip and the image-forming apparatus. When the consumable is not used by the image-forming apparatus (the consumable is not in working state, for example, when the consumable is installed in the image-forming apparatus but not used, or when the consumable is removed from the image-forming apparatus), the contacts of the consumable chip may or may not be in contact with the contact terminals corresponding to the image-forming apparatus. It should be noted that when the consumable is above-mentioned split structure including the drum cartridge and the developing cartridge that are detachable from each other, the drum cartridge and the developing cartridge may be equipped with consumable chips respectively.

When the consumable is installed on the image-forming apparatus, the consumable chip may communicate with the image-forming apparatus. The communication connection may be a communication connection through a contact, an antenna or a coil, which may not be limited in embodiments of the present disclosure. It should be noted that the consumable chip may store information including original data, which is information related to the image-forming system. For example, original data may include at least one of the following categories: 1) image-forming control related parameters (exemplarily, printing engine control parameter information, including high voltage control parameters, fixing temperature parameters, paper feed speed control parameters and the like; and color calibration parameter information or calibration patterns when the image-forming apparatus is a color printer); and 2) consumables-related parameters (exemplarily, various proportional factors for calculating toner consumption, or basic consumable attribute information, where basic consumable attribute information may be the models of the consumables, the serial numbers of the consumables, the capacity and life of the consumables, and other information). It should be noted that those skilled in the art may also design consumable chips to store other types of original data according to actual needs, which may not be limited in embodiments of the present disclosure.

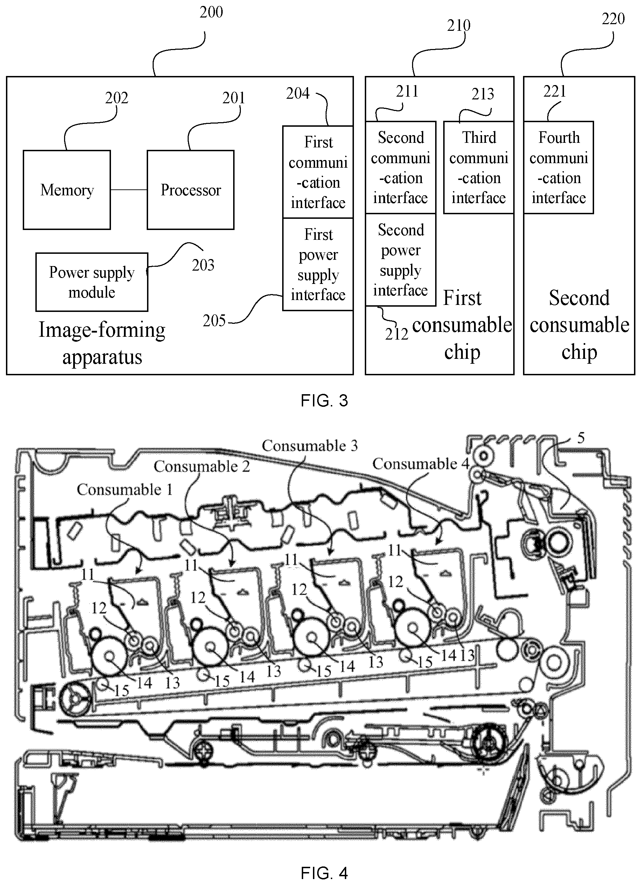

In another embodiment, as shown in FIG. 2, FIG. 2 illustrates a structural schematic of an image-forming apparatus provided by exemplary embodiments of the present disclosure. The second communication interface 211 of a first consumable chip 210 may be electrically connected to the first communication interface 204 of the image-forming apparatus 200, thereby being electrically connected to the processor 201 of the image-forming apparatus 200 through the first communication interface 204. In one example, the first communication interface 204 and the second communication interface 211 may be I2C interfaces respectively. The second power supply interface 212 of the first consumable chip 210 may be electrically connected to the first power supply interface 205 of the image-forming apparatus 200, such that the image-forming apparatus 200 may supply power to the first consumable chip 210 through the first power supply interface 205 and the second power supply interface 212. In another embodiment, the first consumable chip 210 and the second consumable chip 220 may form a chipset, as shown in FIG. 3, the first consumable chip 210 may be also electrically connected to a second consumable chip 220; and the first consumable chip 210 and the second consumable chip 220 may communicate with each other. When the image-forming apparatus 200 communicates with the first consumable chip 210, the image-forming apparatus 200 may act as a host to send instructions to the first consumable chip 210, and the first consumable chip 210 may act as a slave to respond to the instructions sent by the host. When the first consumable chip 210 communicates with the second consumable chip 220, the first consumable chip 210 may act as a host to send instructions to the second consumable chip 220, and the second consumable chip 220 may act as a slave to respond to the instructions sent by the first consumable chip 210. The instructions sent by the first consumable chip 210 to the second consumable chip 220 may be generated by the first consumable chip 210, or the first consumable chip 210 may forward the instructions sent by the image-forming apparatus 200. At this point, the first consumable chip 210 may determine which part should process the instructions sent by the image-forming apparatus 200. When it is determined that the instructions should be processed by the second consumable chip 220, the instructions may be forwarded to the second consumable chip 220. The third communication interface 213 of the first consumable chip 210 may be electrically connected to the fourth communication interface 221 of the second consumable chip 220. In one embodiment, the third communication interface 213 and the fourth communication interface 221 mentioned above may be wired communication interfaces (for example, I2C interfaces), or optical, infrared or other appropriate information transmission path interfaces. In some embodiments, a switch controlled by the first consumable chip may be disposed in the communication link between the first consumable chip and the image-forming apparatus. When the first consumable chip determines that the first consumable chip needs to communicate with the image-forming apparatus at current stage, the communication link between the first consumable chip and the image-forming apparatus may be connected by the switch, or the communication link between the first consumable chip and the image-forming apparatus may be kept connected. When the first consumable chip determines that the second consumable chip needs to communicate with the image-forming apparatus at current stage, the communication link between the second consumable chip and the image-forming apparatus may be connected through the switch. When the first consumable chip determines that the second consumable chip does not need to communicate with the image-forming apparatus at current stage, the communication link between the second consumable chip and the image-forming apparatus may be disconnected by the switch. The information processing apparatus described in the embodiment of the present application may include a chipset comprising the first consumable chip 210 and the second consumable chip 220 .

Furthermore, the image-forming apparatus may include an image-forming control portion and an image-forming portion. The image-forming control portion may be configured to control the image-forming apparatus as a whole, and the image-forming portion may be configured to form images on the conveyed paper based on the image data under the control of the image-forming control portion.

The image-forming control portion may be a system on chip (SoC). SoC is a miniature system including multiple system components, which may be configured to control the image-forming processing operations of the image-forming apparatus, for example, perform linear correction, noise reduction, bad pixel removal, detail enhancement and other processing, thereby improving the quality of the image output. The image-forming control portion may be also configured to perform processing operations related to data transmission and reception, command transmission and reception, and engine control of printing images, for example, transmit and receive data, print engine control commands, status and the like through an interface unit (including but not limited to a USB port, a wired network port, a wireless network port, or other interfaces).

Referring to FIG. 4, FIG. 4 illustrates a structural schematic of an image-forming apparatus provided by exemplary embodiments of the present disclosure. As shown in FIG. 4, the image-forming portion of the image-forming apparatus may include a developer containing portion11, a developing part 12, a developer conveying unit 13, a photosensitive part 14, a transferring part 15 and a fixing assembly 5 and the like. The paper to-be-printed may move along the paper feeding direction; after the toner feeding operation of the developer conveying unit 13 and the developing operation of the developing part 12, the paper may reach the clamping area between the photosensitive part 14 and the transferring part 15 for transfer; and the paper may then pass through the fixing assembly 5 for fixing to complete the image-forming operation. The developer containing portion 11 may be configured to contain the developer which may be a material such as toner, carbon toner or the like; the developing part 12 may include a developing roller or the like; the developer conveying unit 13 may include a toner feeding roller or the like; the photosensitive part 14 may include a photosensitive drum (OPC) and a charging roller and the like, where the charging roller may be configured to charge the photosensitive drum.

The image-forming apparatus may be detachably installed with at least one consumable. Taking the image-forming apparatus shown in FIG2 as an example, the image-forming apparatus may be detachably installed with four consumables (the consumable 1, the consumable 2, the consumable 3 and the consumable 4 shown in FIG2 respectively). Four consumables may be to provide the image-forming apparatus with four colors (black K, cyan C, magenta M and yellow Y) of developers. Obviously, in other embodiments, the number of consumables installed in the image-forming apparatus may be increased or decreased, for example, 5 or 6 or even more or less, which may not be limited in the present disclosure.

In the existing technology, in order to ensure the security of original data stored in the consumable chip, the original data may be verified using the verification information calculated by the existing algorithm such as sha-512. However, the inventors had found through research that the data length of the verification information in above verification method may be relatively long, and the communication efficiency between the image-forming apparatus and the consumable chip may be relatively low. Relatively long time may be needed to transmit the verification information, which may make the image-forming apparatus take relatively long time to complete the verification of the original data and then process the next task or enter the next stage (such as entering the print ready state, the print engine rubbing paper, rendering the received image, etc.), which may lead to problems such as untimely task processing and high system overhead.. When the image-forming apparatus enters the ready state, the image-forming apparatus may immediately perform the image-forming operation after receiving data to-be-printed.

To solve above-mentioned problems, embodiments of the present disclosure provide a data verification method. The consumable chip may generate relatively short target verification information, and the image-forming apparatus may verify the original data based on relatively short target verification information. Since the data length of the target verification information is relatively short, when the target verification information is transmitted between the image-forming apparatus and the consumable chip, the communication time between the image-forming apparatus and the consumable chip may be shortened,, so as to solve the problem in the prior art that in the process of verifying the consumables, due to the longer data length of the verification information and the relatively low communication efficiency between the image-forming apparatus and the consumables, it takes a longer time to transmit the verification information, which makes it take a longer time for the image-forming apparatus to process the next task or enter the next stage.

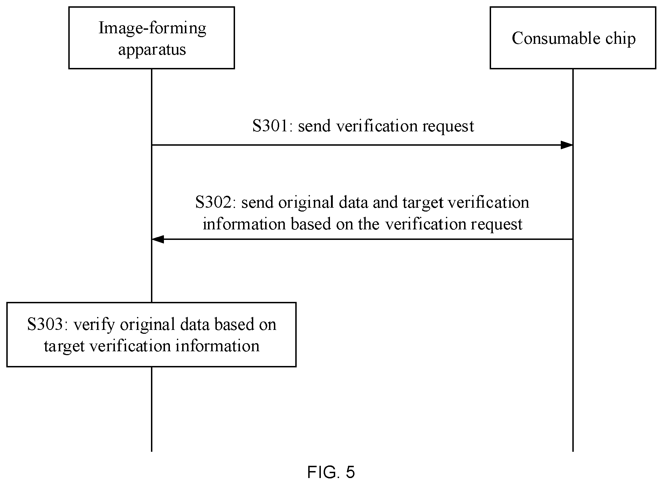

Referring to FIG. 5, FIG. 5 illustrates a flowchart of a data verification method provided by exemplary embodiments of the present disclosure. The method may be applied to the application scenarios shown in FIGS. 1-3. As shown in FIG. 5, the method may mainly include the following exemplary steps.

At S301, the image-forming apparatus may send a verification request to the consumable chip.

In embodiments of the present disclosure, the verification request may be configured to instruct the consumable chip to feedback the original data and the verification information corresponding to the original data. The verification information corresponding to the original data may be information configured to verify the security of the original data.

At S302, the consumable chip may send the original data and target verification information to the image-forming apparatus based on the verification request.

For example, after receiving above-mentioned verification request sent by the image-forming apparatus, the consumable chip may send the original data and the target verification information to the image-forming apparatus based on the verification request. The target verification information involved in embodiments of the present disclosure may be verification information with a relatively short data length. For example, compared with the verification information obtained by directly calculating the original data using existing algorithms such as sha-512, the data length of the target verification information may be relatively short. The generation process of the target verification information is described in detail below. It may be understood that the consumable chip may send the original data and the target verification information to the image-forming apparatus based on the request. For example, the original data and the target verification information may be sent simultaneously. Exemplarily, the consumable chip may send a communication instruction to the image-forming apparatus to realize the transmission of the original data and the target verification information. The original data and the target verification information may be not sent simultaneously. For example, the consumable chip may send different communication instructions to the image-forming apparatus at different times, thereby realizing the transmission of the original data and the target verification information.

At S303, the image-forming apparatus may verify the original data based on the target verification information.

For example, after receiving the original data and the target verification information sent by the consumable chip, the image-forming apparatus may perform security verification on the original data based on the target verification information. That is, at least partial data in the target verification information may be configured to verify the original data. The composition of the target verification information may not be limited in embodiments of the present disclosure, as long as the target verification information contains content that may be used to verify the original data.

For example, security verification of original data refers to the process of confirming the completeness and availability of the original data. Completeness indicates that the original data is not mistakenly modified, maliciously modified or deleted during storage, processing and transmission. Availability indicates that the original data may be correctly obtained and used to ensure that the original data may be accessed and used in a timely and accurate manner. After receiving the original data and the target verification information sent by the consumable chip, the image-forming apparatus may generate reference verification information based on the original data in a same manner as the target verification information is generated based on the original data. Then, received target verification information and the reference verification information may be compared to determine whether received target verification information and the reference verification information are consistent. If there is any inconsistency, the original data cannot pass the security verification; and furthermore, the image-forming apparatus may determine that the consumable is abnormal.

In embodiments of the present disclosure, the data length of the target verification information may be relatively short. Therefore, when the target verification information is transmitted between the image-forming apparatus and the consumable chip, the communication time between the image-forming apparatus and the consumable chip may be shortened, so as to solve the problem in the prior art that in the process of verifying the consumables, due to the longer data length of the verification information and the relatively low communication efficiency between the image-forming apparatus and the consumables, it takes a longer time to transmit the verification information, which makes it take a longer time for the image-forming apparatus to process the next task or enter the next stage.

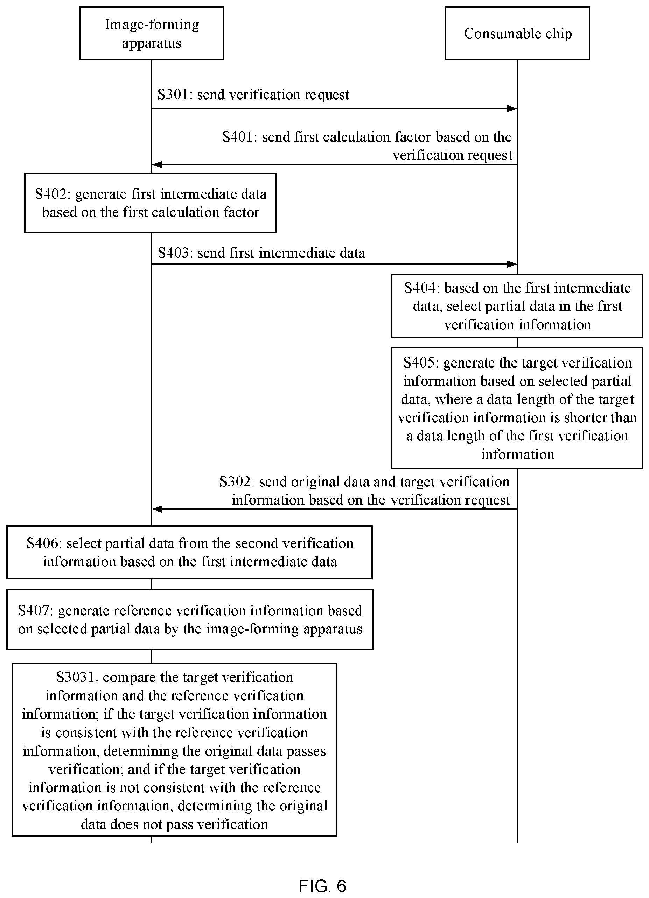

Referring FIG. 6, FIG. 6 illustrates another flowchart of a data verification method provided by exemplary embodiments of the present disclosure. As shown in FIG. 6, the method may further include the following exemplary steps after S301 and before S302 being completed shown in FIG. 5.

At S401, the consumable chip may send the first calculation factor to the image-forming apparatus based on above-mentioned verification request.

For example, after receiving above-mentioned verification request sent by the image-forming apparatus, the consumable chip may determine the first calculation factor based on the verification request. The specific determination manner may be to randomly select a number from a preset first data set as the first calculation factor, or to determine the first calculation factor by other manners, which may not be limited in embodiments of the present disclosure. Then, the first calculation factor may be sent to the image-forming apparatus; and the first calculation factor may be configured to generate the first intermediate data.

It may be understood that the consumable chip may send the original data and the first calculation factor to the image forming apparatus. For example, the original data and the first calculation factor may be sent simultaneously. Exemplarily, the consumable chip may send the original data and the first calculation factor to the image forming apparatus via the same data frame. Alternatively, the original data and the first calculation factor may be sent asynchronously. Exemplarily, the consumable chip sends the original data and the first calculation factor to the image forming apparatus via different data frames, thereby realizing the transmission of the original data and the first calculation factor .

At S402, the image-forming apparatus may generate the first intermediate data based on the first calculation factor.

In an optional implementation manner, after receiving the first calculation factor, the image-forming apparatus may generate the first intermediate data based on the first calculation factor according to a preset algorithm. That is, in such implementation manner, the first intermediate data may be generated only based on the first calculation factor generated by the consumable chip. In another optional implementation manner, after receiving the first calculation factor, the image-forming apparatus may generate the second calculation factor, and then generate the first intermediate data based on the first calculation factor and the second calculation factor according to the third algorithm. That is, in such implementation manner, the first intermediate data may be generated based on the first calculation factor generated by the consumable chip and the second calculation factor generated by the image-forming apparatus. The present disclosure may not limit the generation manner of the first intermediate data, as long as the first calculation factor is used.

For ease of explanation, in the following description, the first calculation factor is marked as "R1"; the second calculation factor is marked as "R2"; and the first intermediate data is marked as "M".

Exemplarily, the first calculation factor R1 may be any data in the first data set. After obtaining the first calculation factor R1, with R1 as the coordinate, the data corresponding to R1 may be searched in the preset one-dimensional data table, and the found data corresponding to R1 may be configured as the first intermediate data M.

Exemplarily, the first calculation factor R1 may be any data in the first data set, and the second calculation factor R2 may be any data in the second data set. After obtaining the first calculation factor R1 and the second calculation factor R2, with (R1, R2) as coordinates, the data may be searched in the preset data table, and the found data may be configured as the first intermediate data M.

Exemplarily, the first calculation factor R1 and the second calculation factor R2 may be both random integers. After obtaining the first calculation factor R1 and the second calculation factor R2, R1+R2 may be calculated, and the calculation result of R1+R2 may be converted into data of corresponding bits (for example, 8 bits, 16 bits or the like) to obtain the first intermediate data M. For example, the data of the first data set is a binary integer ranging from 1 to 1111111, the data of the second data set is a binary integer ranging from 1 to 10000000, and corresponding bit number is set to 8 bits. When R1 is the binary number 1010000, R2 is the binary number 10010 and the binary number M is 8 digits, M=R1+R2=1010000+10010=01100010. For example, the data of the first data set is a decimal integer ranging from 0 to 32767, the data of the second data set is a decimal integer ranging from 0 to 32768, and corresponding bit number is set to 16 bits. When R1 is the decimal number 32000 and R2 is the decimal number 31000, M=R1+R2=32000+31000= 63000, which may be converted to a 16-bit binary number of 1111011000011000.

In the present disclosure, since the image-forming apparatus generates the first intermediate data based on the first calculation factor sent by the consumable chip, the generation process of the first intermediate data may be more random, which may improve the security of data verification. For example, the consumable chip and the image-forming apparatus may provide the first calculation factor R1 and the second calculation factor R2 respectively each time the data verification method provided by embodiments of the present application is executed; and R1 and R2 may be both configured to generate the first intermediate data. That is, both the consumable chip and the image-forming apparatus may participate in the generation process of the first intermediate data. Compared with the case where the generation of the first intermediate data is determined by only one party, the generation process of the first intermediate data base on the first calculation factor R1 provided by the consumable chip and the second calculation factor R2 provided by the image-forming apparatus may be random for either the image-forming apparatus or the consumable chip, which may be not easily counterfeited to improve the security of data verification.

Obviously, those skilled in the art may also use other manners to generate the first intermediate data M according to actual needs. In addition, in the process of generating the first intermediate data M, in addition to using the first calculation factor R1 and the second calculation factor R2, other data may also be needed, which may not be limited in embodiments of the present disclosure.

At S403, the image-forming apparatus may send the first intermediate data to the consumable chip.

For example, after generating the first intermediate data M, the image-forming apparatus may send the first intermediate data M to the consumable chip.

At S404, the consumable chip may select partial data from the first verification information based on the first intermediate data. After obtaining the first intermediate data M, the consumable chip may select partial data from the first verification information based on the first intermediate data M.

In one embodiment of the present disclosure, the first verification information may be generated based on the original data according to the preset first algorithm. Exemplarily, the first algorithm may be an existing algorithm such as sha-512. It may be understood that the data length of the first verification information generated by processing the original data using existing algorithms such as sha-512 may be relatively long. For example, the data length of the first verification information generated by processing the original data using the sha-512 algorithm may reach 64 bytes. Embodiments of the present disclosure may not limit the generation subject of the first verification information. The first verification information may be generated by the consumable chip based on the original data according to the first algorithm. The first verification information may also be generated by other subjects other than the consumable chip and then provided to the consumable chip, such that the consumable chip may use the first verification information to determine the target verification information.

In an optional implementation manner, the consumable chip may pre-store an existing algorithm such as sha-512 as the calculation logic of the preset first algorithm and store the original data. Before selecting partial data from the first verification information based on the first intermediate data, the consumable chip may first generate the first verification information based on the original data according to the first algorithm.

In another optional implementation manner, the consumable chip may not need to store an existing algorithm such as sha-512 as the calculation logic of the preset first algorithm but may be directly pre-written with the first verification information. That is, the consumable chip may pre-store the first verification information.

It should be noted that the consumable chip selects partial data from the first verification information based on the first intermediate data, which may include the following ways of understanding.

For the first way of understanding, in one embodiment, after receiving the first intermediate data, the consumable chip may select partial data from the first verification information based on the first intermediate data.

For the second way of understanding, in another embodiment, after receiving the first intermediate data, the consumable chip may select partial data from the first verification information according to the preset rule, and the present disclosure may not specifically limit the preset rule.

That is, partial data may be selected from the first verification information using the first intermediate data, or partial data may be selected from the first verification information without relying on the first intermediate data.

In the first way of understanding, when the consumable chip selects partial data from the first verification information using the first intermediate data, selected partial data may be generated directly based on the first intermediate data M or may be generated indirectly based on the first intermediate data M, which may not be limited in embodiments of the present disclosure. Exemplarily, in the first implementation manner, selected partial data may be directly generated based on the first intermediate data M; in the second implementation manner, partial data may be selected based on the conversion data corresponding to the first intermediate data M, where the conversion data corresponding to the first intermediate data M may be the result of calculating the first intermediate data M using a preset algorithm; and in the third implementation manner, preliminary data of selected partial data may be generated based on the first intermediate data M or the conversion data corresponding to the first intermediate data M, and the preliminary data of selected partial data may be calculated according to the preset algorithm to generate selected partial data. That is, the present disclosure may not limit the specific manner of selecting partial data, as long as the partial data selected by the consumable chip is same as the partial data of the first verification information.

In the second way of understanding, partial data may be selected from the first verification information without relying on the first intermediate data. Exemplarily, after the consumable chip receives the first intermediate data, the consumable chip may be triggered to select partial data from the first verification information using a preset rule to determine partial data. The consumable chip may select partial data from the first verification information using a preset rule, which may be to divide the first verification information into several segments and select the segments with even numbers from left to right as selected partial data. For example, the first verification information may be divided into 8 segments, ABCDEFGH; and the 2nd, 4th, 6th, and 8th segments, that is, BDFH, may be selected. Or the data of a preset segments may be directly selected from the first verification information as selected partial data. For example, the preset segments may be the 1st, 3rd, and 5th segments, that is, ACE.

It should be noted that in embodiments of the present disclosure, it may only need to ensure that at least partial data of the target verification information corresponds to partial data of the first verification information. The specific manner of selecting partial data from the first verification information based on the first intermediate data and generating the target verification information based on selected partial data may not be limited in the present disclosure.

At S405, the consumable chip may generate above-mentioned target verification information based on selected partial data, where the data length of the target verification information shorter than the data length of above-mentioned first verification information.

In an optional implementation manner, selected partial data may be directly used as the target verification information, such that the data length of the target verification information may be shorter than the data length of the first verification information.

In another optional implementation manner, the target verification information may be generated based on selected partial data combined with other data, and the data length of the target verification information may be shorter than the data length of the first verification information. Embodiments of the present disclosure may not limit the selection of other data, as long as the data length of the target verification information finally generated is shorter than the data length of the first verification information. Exemplarily, the target verification information may include other data and selected partial data, where the other data may be configured as the data header of the target verification information, and selected partial data may be configured as other components of the target verification information.

In another optional implementation manner, the target verification information may also be generated based on selected partial data using a preset algorithm.

In another optional implementation manner, the target verification information may also be generated based on a part of selected partial data. The part of selected partial data may be directly used as the target verification information; the target verification information may also be generated by combining the part of selected partial data with other data; and the target verification information may also be generated by calculating using a preset algorithm, as long as the data length of the target verification information is shorter than the data length of the first verification information.

Based on the above, the target verification information may be generated based on the first intermediate data and the first verification information.

Referring to FIG. 6, after S302 shown in FIG. 5, embodiments of the present disclosure may further include S406: the image-forming apparatus selects partial data from the second verification information based on the first intermediate data.

In embodiments of the present disclosure, the second verification information may be generated based on the original data according to a preset first algorithm.

In one embodiment of the present disclosure, the second verification information may be generated by the image-forming apparatus based on the original data according to the preset first algorithm. Exemplarily, the first algorithm may be an existing algorithm such as sha-512. It may be understood that the data length of the second verification information generated by processing the original data using existing algorithms such as sha-512 may be relatively long. For example, the data length of the second verification information generated by processing the original data using the sha-512 algorithm may reach 64 bytes.

It should be noted that, in order to ensure that the verification result of the image-forming apparatus verifying the original data based on the target verification information is correct, the first algorithm used by the image-forming apparatus to generate the second verification information based on the original data may be same as the first algorithm used to generate the first verification information in S404.

It should be noted that, in embodiments of the present disclosure, the image-forming apparatus may select partial data from the second verification information based on the first intermediate data in a same manner as S404 mentioned above; that is, the consumable chip may select partial data from the first verification information based on the first intermediate data in a same manner. Therefore, specific selection description may refer to the description of S404 mentioned above, which may not be described in detail for simplicity.

At S407, the image-forming apparatus may generate the reference verification information based on selected partial data.

After generating the second verification information, the image-forming apparatus may select partial data from the second verification information based on the first intermediate data M and generate the reference verification information based on selected partial data.

It should be noted that in embodiments of the present disclosure, the generation manner of the reference verification information may be same as the generation manner of the target verification information mentioned above. Therefore, specific selection description may refer to the description of the target verification information mentioned above and may not be described in detail herein for simplicity.

Referring to FIG. 6, embodiments of the present disclosure may exemplarily include S3031 in S303 shown in FIG3: above-mentioned target verification information may be compared with above-mentioned reference verification information. If the target verification information and the reference verification information are consistent with each other, it is determined that the verification is passed; if the target verification information and the reference verification information are inconsistent with each other, it is determined that the original data has not passed the verification.

As mentioned above, the generation manner of the second verification information and the reference verification information may be same as the generation manner of the first verification information and the target verification information. Therefore, if the original data stored in the consumable chip is not abnormal and the data transmission between the consumable and the image-forming apparatus is not abnormal, the reference verification information and the target verification information should be consistent with each other, that is, the security of the original data may be secure. By comparing the reference verification information and the target verification information, the security of the original data may be determined. For example, if the reference verification information and the target verification information are consistent with each other, it is determined that the verification is passed; if the reference verification information and the target verification information are inconsistent with each other, it is determined that the verification is not passed.

In one embodiment of the present disclosure, if it is determined that the verification is not passed, it indicates that the storage of the consumable chip and/or the communication link between the consumable and the image-forming apparatus is abnormal and unreliable, so that the image-forming apparatus may determine that the consumable is abnormal. Furthermore, operations such as restricting the use of the consumable may be performed. If it is determined that the verification is passed, it indicates that the storage of the consumable chip, and the communication link between the consumable and the image-forming apparatus may be all reliable, and the image-forming apparatus may determine that the consumable is normal.

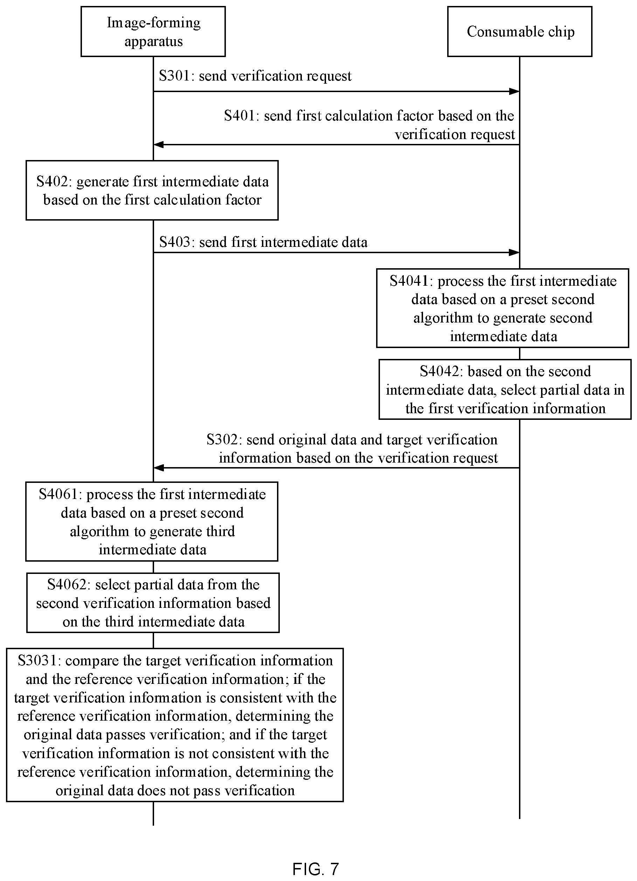

Referring to FIG. 7, FIG. 7 illustrates another flowchart of a data verification method provided by exemplary embodiments of the present disclosure. As shown in FIG. 7, the method may exemplarily include the following exemplary steps in S404 shown in FIG. 5.

At S4041, the consumable chip may process the first intermediate data based on the preset second algorithm to generate the second intermediate data.

For ease of explanation, the second intermediate data is marked as "P" in the following description.

It should be noted that the first intermediate data M may be binary data or non-binary data. When the first intermediate data M is non-binary data, the consumable chip may need to first convert the first intermediate data M to obtain corresponding binary data, and then process obtained binary data based on the preset second algorithm to generate the second intermediate data P.

In an optional implementation manner, the first intermediate data M may be 8-bit binary data. The preset second algorithm may be the following: the first N valid bits may be identified in the first intermediate data M from left to right, where the valid bit may be a binary bit with a value of "1", and the invalid bit may be a binary bit with a value of "0", and N ≥ 1 (for example, N may be 1, 2, 3, 5 or the like); when the first N valid bits in the first intermediate data M are identified, the binary bits in the first intermediate data M except the first N valid bits from left to right may be set as invalid bits to obtain the second intermediate data P; if the identification of each bit of the first intermediate data M is completed and the number of valid bits identified is less than N, the first intermediate data M may be bitwise inverted; and the binary bits obtained after bitwise inversion except for the first N valid bits from left to right may be set as invalid bits to obtain the second intermediate data P; and when each bit of the first intermediate data M is identified, the valid bits identified may be equal to 0, and the second intermediate data P may be set as binary data, and P=0010 1001. Therefore, corresponding preset rule is described as the following.
1) When the first intermediate data M is 8-bit binary data and the number of valid bits ≥ N, the second intermediate data P may be 8-bit binary data, the number of valid bits = N, the number of invalid bits = 8-N, and the positions of the valid bits of the second intermediate data P may be same as the positions of the first N valid bits of the first intermediate data M from left to right.
   the binary bits obtained after bitwise inversion except for the first N valid bits from left to right may be set as invalid bits to obtain the second intermediate data P
2) When the first intermediate data M is 8-bit binary data, and 0<the number of valid bits<N, the second intermediate data P may be equal to the binary bits except for the first N valid bits from left to right (set as invalid binary bits) after bitwise inverting the first intermediate data M.
3) When the first intermediate data M is an 8-bit binary data and the number of valid bits = 0, the second intermediate data P may be 8-bit binary data, and P = 0010 1001.

Exemplarily, the first intermediate data M=1010 0101, according to the conditions of "valid bits are binary bits with a value of '1', invalid bits are binary bits with a value of '0'", "N=3", "valid bits are identified in order from left to right", the valid bits in the first intermediate data M may be identified. Therefore, the first three valid bits identified may be the first, third and sixth binary bits in M, respectively. After setting the binary bits other than the three valid bits to invalid bits, the second intermediate data P obtained may be binary data, and P=1010 0100.

Exemplarily, the first intermediate data M=0010 0100, according to the conditions of "valid bits are binary bits with a value of '1', invalid bits are binary bits with a value of '0'", "N=3", "valid bits are identified in order from left to right", the valid bits in the first intermediate data M may be identified. Therefore, two valid bits identified may be the third and sixth binary bits in M, 0 < the number of valid bits < N, the first intermediate data M may be bitwise inverted to obtain the binary number 1101 1011. The binary bits other than the first N valid bits of the bit-inverted number 1101 1011 from left to right may be set as invalid bits, and the second intermediate number P = 1101 0000.

Exemplarily, if the first intermediate data M=0000 0000, according to the conditions of "valid bits are binary bits with a value of '1', invalid bits are binary bits with a value of '0'", "N=3", and "valid bits are identified in order from left to right", the valid bits in the first intermediate data M may be identified. When each bit of the first intermediate data M is identified, the number of valid bits identified = 0, and the second intermediate data P may be set to binary data, and P = 0010 1001.

It should be noted that above optional implementation manner is only one of the optional implementation manners. In other optional implementation manners, the identification order of the valid bits of the first intermediate data M in the preset second algorithm may also be from right to left, the valid bits may also be binary bits with a value of '0'; and correspondingly, the invalid bits may be binary bits with a value of "1". Those skilled in the art may also set the preset second algorithm to another algorithm according to actual needs, which may not be limited in embodiments of the present disclosure. It should also be noted that the consumable chip may directly process the first intermediate data based on the preset second algorithm to generate the second intermediate data; and may indirectly process the first intermediate data based on the preset second algorithm to generate the second intermediate data, as long as the second intermediate data generated by the consumable chip follows corresponding preset rule.

The consumable chip may indirectly process the first intermediate data based on the preset second algorithm to generate the second intermediate data, which may include the following implementation manners.

In an optional implementation manner, the first intermediate data M may be binary data. After obtaining the first intermediate data M (binary data), the consumable chip may process the first intermediate data M by a manner including bitwise inversion and the like to obtain the conversion data of the first intermediate data M; the operation rule in the preset second algorithm may be transformed to obtain transformed algorithm of the preset second algorithm; and the conversion data of the first intermediate data M may be processed based on the transformed algorithm of the preset second algorithm to generate the second intermediate data P.

In an optional implementation manner, the first intermediate data M may be binary data. The consumable chip may transform the operation rule in the preset second algorithm to obtain transformed algorithm of the preset second algorithm; after obtaining the first intermediate data M (binary data), the consumable chip may process the first intermediate data M based on the transformed algorithm of the preset second algorithm to obtain the preliminary data of the second intermediate data P; and the preliminary data of the second intermediate data P may be processed to obtain the second intermediate data P.

In an optional implementation manner, the first intermediate data M may be binary data. After obtaining the first intermediate data M (binary data), the consumable chip may process the first intermediate data M by a manner including bitwise inversion and the like to obtain the conversion data of the first intermediate data M; based on the preset second algorithm, the conversion data of the first intermediate data M may be processed to generate the preliminary data of the second intermediate data P; and the preliminary data of the second intermediate data P may be processed to obtain the second intermediate data P.

Obviously, those skilled in the art may also use other manners to generate the second intermediate data P according to actual needs, which may not be limited in embodiments of the present disclosure.

At S4042, the consumable chip may select partial data from the first verification information based on the second intermediate data.

In an implementation manner, the consumable chip may select data matching the valid bits in the second intermediate data P from at least partial data in the first verification information based on the second intermediate data P to obtain selected partial data.

It should be noted that selected partial data may be directly generated based on the second intermediate data P or may be indirectly selected based on the second intermediate data P, which may not be limited in embodiments of the present disclosure. Exemplarily, in the first implementation manner, selected partial data may be directly generated based on the second intermediate data P. In the second implementation manner, partial data may also be generated based on the conversion data corresponding to the second intermediate data P, where the conversion data of the second intermediate data P may be the result obtained by calculating the second intermediate data P using a preset algorithm. In the third implementation manner, preliminary data of partial data may be generated based on the conversion data corresponding to the second intermediate data P or the second intermediate data P, and the preliminary data of the target verification information may be converted using a preset algorithm to obtain selected partial data.

Exemplarily, the first verification information may be 64 bytes of data, and the first verification information may be equally divided into eight (8) sub-verification information segments, such that each sub-verification information segment may contain 8 bytes, that is, 64 bits. For example, the second intermediate data P=0010 0110 (valid bits are binary bits with a value of "1", and invalid bits are binary bits with a value of "0"), and the eight (8) sub-verification information segments may be ABCD EFGH. According to the second intermediate data P, the third sub-verification information segment "C", the sixth sub-verification information segment "F" and the seventh sub-verification information segment "G" binary bits may be selected from the eight sub-verification information segments, and selected information may be combined to obtain the target verification information, that is, CFG. It may be understood that selected partial data may be only a part of the first verification information; the target verification information may be generated based on selected partial data; and the data length of the target verification information may be shorter than the data length of the first verification information. Therefore, the communication time between the image-forming apparatus and the consumable chip may be shortened, so as to solve the problem in the prior art that in the process of verifying the consumables, due to the longer data length of the verification information and the relatively low communication efficiency between the image-forming apparatus and the consumables, it takes a longer time to transmit the verification information, which makes it take a longer time for the image-forming apparatus to process the next task or enter the next stage.

It should be noted that, in addition to generating target verification information based on the second intermediate data P and the first verification information, in embodiments of the present disclosure, the data matching the valid bits in the first intermediate data M may be directly selected in the first verification information based on above-mentioned first intermediate data M; and above-mentioned target verification information may be generated based on selected data. Exemplarily, the valid bits may be binary bits with a value of '1' and the number of valid bits may be 3, and the valid bits may be identified in order from left to right. The first intermediate data M may be 10110000, the first verification information may be 64 bytes of data, and the first verification information may be segmented into ABCD EFGH. Therefore, the sub-verification information segments that match the valid bits selected by the first intermediate data M may be A, C, and D; and the target verification information obtained may be ACD. Exemplarily, the valid bits maybe binary bits with a value of '1', the number of valid bits may be 3, and the valid bits may be identified in order from left to right. The first intermediate data M may be 10111000, the first verification information may be 64 bytes of data, and the first verification information may be segmented into ABCD EFGH. Therefore, using the first intermediate data M, according to the first three "1" bits as valid bits, the sub-verification information segments with matching valid bits may be selected as A, C, and D, and the "1" after the third "1" bit may be directly ignored, and the target verification information obtained may be ACD.

Obviously, those skilled in the art may also use other manners to select partial data from the first verification information according to actual needs, which may not be limited in embodiments of the present disclosure.

Referring to FIG. 7, exemplarily, the method may include the following exemplary steps in S406 shown in FIG. 6.

At S4061, the image-forming apparatus may process the first intermediate data based on the preset second algorithm to generate the third intermediate data.

For ease of explanation, the third intermediate data is marked as P' in the following description.

It should be noted that the first intermediate data M may be binary data or non-binary data. When the first intermediate data M is non-binary data, the image-forming apparatus may need to first convert the first intermediate data M to obtain corresponding binary data, and then process obtained binary data based on the preset second algorithm to generate the third intermediate data marked as P'.

In an optional implementation manner, when the first intermediate data M is binary data, after obtaining the first intermediate data M, the image-forming apparatus may directly process the first intermediate data M to generate the third intermediate data P'.

Specific generation process of processing the binary first intermediate data M or the binary data obtained by converting the non-binary first intermediate data M to generate the third intermediate data P' may refer to the generation process of the second intermediate data P in above-mentioned S4041. Therefore, specific description of S4061 may refer to the description of S4041 mentioned above, which may not be described in detail herein for simplicity.

At S4062, the image-forming apparatus may select partial data from the second verification information based on the third intermediate data.

In an implementation manner, the image-forming apparatus may select data matching the valid bits in the third intermediate data P' from at least a part of the data in the second verification information based on the third intermediate data P', thereby obtaining selected partial data.

It should be noted that the method for generating selected partial data in S4062 may be same as the method for generating selected partial data in S4042 mentioned above. Therefore, specific description of S4062 may refer to the description of S4042 mentioned above, which may not be described in detail for simplicity.

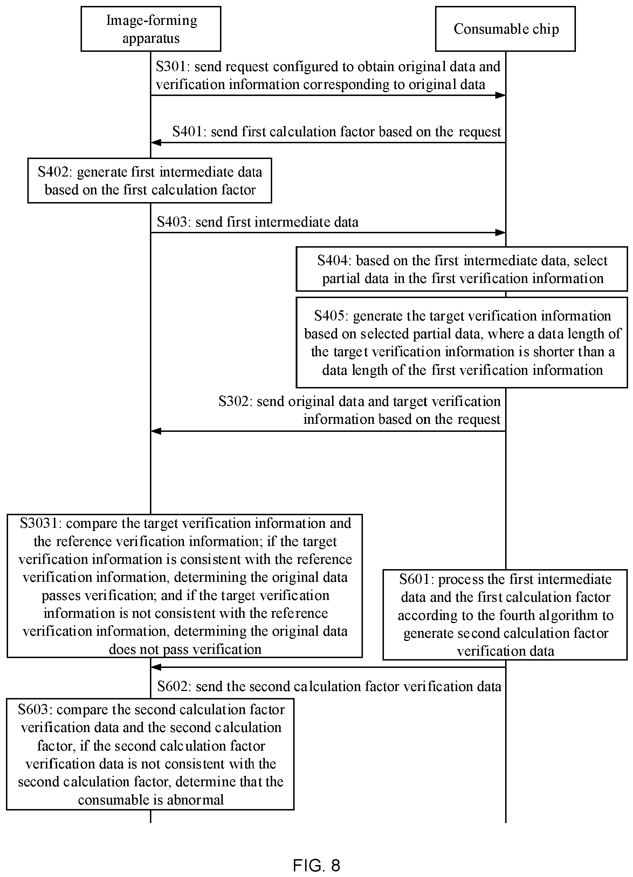

Referring to FIG. 8, FIG. 8 illustrates another flowchart of a data verification method provided by exemplary embodiments of the present disclosure. As shown in FIG. 8, the method may further include the following exemplary steps based on FIG. 6.

At S601, the consumable chip may process the first intermediate data and the first calculation factor according to the fourth algorithm to generate the second calculation factor verification data.

For ease of explanation, the second calculation factor verification data is marked as R2' in the following description.

As mentioned above, the first intermediate data M may be generated by the image-forming apparatus according to the third algorithm based on the first calculation factor R1 and the second calculation factor R2. Therefore, by processing the first intermediate data M and the first calculation factor R1 according to the fourth algorithm, the second calculation factor verification data R2' corresponding to the second calculation factor R2 may be generated, where the third algorithm and the fourth algorithm may be inverse operations of each other. Exemplarily, if the first calculation factor R1 is any data in the first data set, the second calculation factor R2 may be any data in the second data set. After obtaining the first calculation factor R1 and the second calculation factor R2, the image-forming apparatus may use (R1, R2) as coordinates to search for data in a preset data table, and the found data may be configured as the first intermediate data M. On the contrary, the consumable chip may search the ordinate R2' (the second calculation factor verification data) corresponding to the first intermediate data M in the preset data table according to the first intermediate data M and the abscissa R1 (the first calculation factor).

It should be noted that, according to actual needs, those skilled in the art may also indirectly process the first intermediate data M and the first calculation factor R1 according to the fourth algorithm to generate the second calculation factor verification data R2'. Exemplarily, the data of the first data set may be binary integers ranging from 00000001 to 01111111; the data of the second data set may be binary integers ranging from 00000001 to 10000000; and the corresponding number of bits may be set to 8 bits. When the first calculation factor R1 is a binary number 01010000, the second calculation factor R2 is a binary number 00010010, the third algorithm is addition, the fourth algorithm is subtraction, M is a binary number, and M=R1+R2=01010000+00010010=01100010, the consumable chip may perform calculations. 00000001 may be subtracted from the first intermediate data M to obtain M'=01100001, 00000001 may be subtracted from the first calculation factor R1 to obtain R3=01001111, and R3 may be subtracted from M' to obtain R2'=00010010, which may be equal to 00010010 obtained by subtracting the first calculation factor R1 from the first intermediate data M, that is, directly processing the first intermediate data M and the first calculation factor R1 according to the fourth algorithm. Obviously, those skilled in the art may also use other manners to generate the second calculation factor verification data R2' according to actual needs, which may not be limited in embodiments of the present disclosure and may only need to satisfy that generated second calculation factor verification data R2' is equal to the data generated by directly processing the first intermediate data M and the first calculation factor R1 according to the fourth algorithm.

At S602, the consumable chip may send the second calculation factor verification data to the image-forming apparatus.

For example, after obtaining the second calculation factor verification data R2', the consumable chip may send the second calculation factor verification data R2' to the image-forming apparatus, such that the image-forming apparatus may perform verification on the consumable based on the second calculation factor verification data R2'.

It may be understood that the consumable chip may send the second calculation factor verification data R2' and the above-mentioned target verification information to the image forming apparatus. For example, the second calculation factor verification data R2' and the target verification information may be sent simultaneously. Exemplarily, the consumable chip may send the second calculation factor verification data R2' and the target verification information to the image forming apparatus via the same data frame. Alternatively, the second calculation factor verification data R2' and the target verification information may be sent asynchronously. Exemplarily, the consumable chip sends the second calculation factor verification data R2' and the target verification information to the image forming apparatus via different data frames, thereby realizing the transmission of the second calculation factor verification data R2' and the target verification information.

At S603, the image-forming apparatus may compare the second calculation factor verification data with the second calculation factor to determine whether the second calculation factor verification data and the second calculation factor are consistent with each other. If the second calculation factor verification data and the second calculation factor are inconsistent with each other, it is determined that the consumable may be abnormal.

It may be understood that if the consumable is normal, the second calculation factor R2 and the second calculation factor verification data R2' should be consistent with each other; if the consumable is abnormal, the second calculation factor R2 and the second calculation factor verification data R2' are inconsistent with each other. Therefore, whether the consumable chip is abnormal may be determined based on the comparison result of the second calculation factor R2 and the second calculation factor verification data R2'. For example, if the second calculation factor R2 and the second calculation factor verification data R2' are consistent with each other, the consumable may be normal; and if the second calculation factor R2 and the second calculation factor verification data R2' are inconsistent with each other, the consumable may be abnormal.

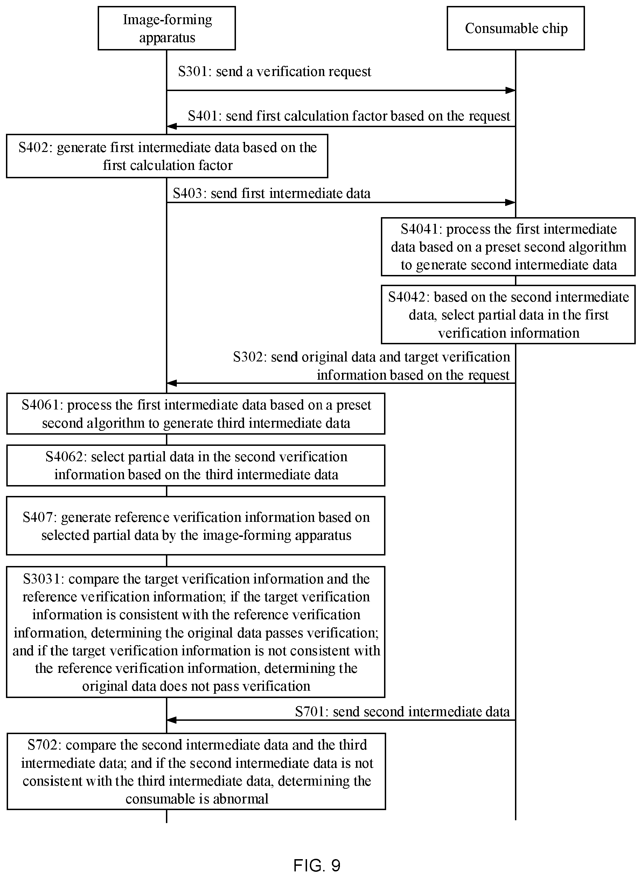

Referring to FIG. 9, FIG. 9 illustrates another flowchart of a data verification method provided by exemplary embodiments of the present disclosure. As shown in FIG. 9, the method may further include the following exemplary steps based on FIG. 7.

At S701, the consumable chip may send the second intermediate data to the image-forming apparatus.

For example, after the consumable chip generates the second intermediate data P, the second intermediate data P may be sent to the image-forming apparatus, such that the image-forming apparatus may perform verification on the consumable based on the second intermediate data P.

In addition to directly outputting the second intermediate data P to the image-forming apparatus, the consumable chip can also integrate the second intermediate data P into the target verification information.

At S702, the image-forming apparatus may compare above-mentioned second intermediate data and above-mentioned third intermediate data. If above-mentioned second intermediate data and above-mentioned third intermediate data are inconsistent with each other, it is determined that above-mentioned consumable may be abnormal.

If the consumable chip directly outputs the second intermediate data P, the image forming device directly receives the second intermediate data P output by the consumable chip; if the consumable chip integrates the second intermediate data P into the target verification information, the image forming device obtains the second intermediate data from the target verification information.

As mentioned above, the second intermediate data P and the third intermediate data P' may be generated in a same manner. Therefore, by comparing the second intermediate data P and the third intermediate data P', it is determined whether the consumable may be abnormal. For example, if the second intermediate data P and the third intermediate data P' are consistent with each other, it is determined that the consumable may be normal; and if the second intermediate data P and the third intermediate data P' are inconsistent with each other, it is determined that the consumable may be abnormal.

It should be noted that the processes shown in FIGS. 3-7 are only exemplary descriptions of one/some specific implementation manners provided by the present disclosure and should not be used as limitations on the protection scope of the present disclosure. Those skilled in the art may combine some of exemplary steps in FIGS. 3-7 in other forms according to actual needs without affecting the feasibility of the solution or adjust the order of some of exemplary steps in FIGS. 3-7, which shall all fall within the scope of protection of the present disclosure.

Exemplarily, S601-S603 in FIG. 8 and S701-S702 in FIG. 9 may be configured in a same embodiment. That is, in one embodiment, the consumable may be verified by "comparing the target verification information and the reference verification information", "comparing the second calculation factor verification data R2' and the second calculation factor R2" and "comparing the second intermediate data P and the third intermediate data P'". In addition, those skilled in the art can arbitrarily arrange above three verification manners, that is, "comparing the target verification information and the reference verification information", "comparing the second calculation factor verification data R2' and the second calculation factor R2" and "comparing the second intermediate data P and the third intermediate data P'" to verify the consumable. Embodiments of the present disclosure may not limit the execution order of three verification manners.

Corresponding to above-mentioned embodiments, embodiments of the present disclosure may further provide a consumable chip.

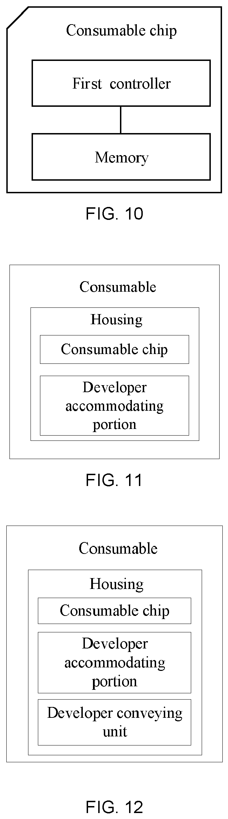

Referring to FIG. 10, FIG. 10 illustrates a structural block diagram of a consumable chip provided by exemplary embodiments of the present disclosure. As shown in FIG. 10, the consumable chip may include the first controller, preferably, the first controller is a MCU (Microcontroller Unit). The first controller may be configured to receive the verification request sent by above-mentioned image-forming apparatus; and send the original data and the target verification information to above-mentioned image-forming apparatus based on above-mentioned verification request, where at least partial data in above-mentioned target verification information may be configured to verify above-mentioned original data. The first controller may be further configured to send the first calculation factor to the image-forming apparatus based on the verification request; receive the first intermediate data generated based on the first calculation factor sent by the image-forming apparatus; and generate the target verification information based on the first intermediate data and the first verification information, where above-mentioned first verification information may be generated based on above-mentioned original data according to the preset first algorithm, and the data length of above-mentioned target verification information may be shorter than the data length of above-mentioned first verification information.

In an optional implementation manner, the consumable chip may further include a memory for storing above-mentioned original data, and/or the conversion information of above-mentioned original data.

In an optional implementation manner, the consumable chip may further include a memory for storing above-mentioned first verification information, and/or conversion information of above-mentioned first verification information.

In an optional implementation manner, exemplarily, the first controller may be configured to process the first intermediate data based on the preset second algorithm to generate second intermediate.

In an optional implementation manner, exemplarily, the first controller may be configured to send the second intermediate data to the image-forming apparatus, where the second intermediate data may be configured to determine whether the consumable is abnormal.

In an optional implementation manner, exemplarily, above-mentioned first controller may be configured to select partial data in above-mentioned first verification information based on above-mentioned first intermediate data; and generate above-mentioned target verification information based on selected partial data.

In an optional implementation manner, at least a part of selected partial data may match at least a part of the valid bits in the first intermediate data.

In an optional implementation manner, exemplarily, the first controller may be configured to generate the target verification information based on the second intermediate data and the first verification information.

In an optional implementation manner, exemplarily, the first controller may be configured to select partial data in the first verification information based on the second intermediate data; and generate the target verification information based on selected part of the data.

In an optional implementation manner, at least a part of selected partial data may match at least a part of the valid bits in the second intermediate data.

In an optional implementation manner, when the first intermediate data is binary data, exemplarily, the first controller may be configured to identify N valid bits in the first intermediate data, where N≥1; and set the binary bits other than the N valid bits in the first intermediate data to invalid bits and obtain the second intermediate data; or when above-mentioned first intermediate data is non-binary data, exemplarily, above-mentioned first controller may be configured to convert above-mentioned first intermediate data into binary data; identify N valid bits in the obtained binary data, where N≥1; and set the binary bits other than above-mentioned N valid bits in above-mentioned binary data to invalid bits, and obtain above-mentioned second intermediate data.

In an optional implementation manner, when the first intermediate data is binary data, exemplarily, the first controller may be configured to: according to the order from left to right or from right to left, identity N valid bits in above-mentioned first intermediate data; and when above-mentioned first intermediate data is non-binary data, exemplarily, above-mentioned first controller may be configured to: according to the order from left to right or from right to left, identity N valid bits in obtained binary data.

In an optional implementation manner, the valid bits may be binary bits with a value of "1", and the invalid bits may be binary bits with a value of "0"; or the valid bits may be binary bits with a value of "0", and the invalid bits may be binary bits with a value of "1".

In an optional implementation manner, the first controller may be further configured to process the first intermediate data and the first calculation factor according to the fourth algorithm to generate the second calculation factor verification data; and send the second calculation factor verification data to the image-forming apparatus, where the second calculation factor verification data may be configured to determine whether the consumable is abnormal.

In an optional implementation manner, exemplarily, the first controller may be configured to process the first intermediate data based on a preset second algorithm to generate the second intermediate data; select partial data from the first verification information based on the second intermediate data; and generate the target verification information based on selected partial data.

In an optional implementation manner, exemplarily, the first controller may be configured to, based on the second intermediate data, select data matching the valid bits in the second intermediate data from at least a part of the data in the first verification information to obtain the target verification information.

In one embodiment, the consumable chip of embodiments of the present disclosure may include a substrate and a plurality of contacts; the plurality of contacts may be arranged on the substrate, and the plurality of contacts may be respectively configured to be electrically connected with a plurality of contact terminals arranged on the image-forming apparatus, thereby realizing communication between the image-forming apparatus and the consumable chip. The plurality of contacts may include a VCC contact, a GND contact, an SDA contact, and an SCL contact.

In another embodiment, the consumable chip in embodiments of the present disclosure may also include a connecting plate in addition to the substrate, where the connecting plate may be electrically connected to the substrate, and at least a part of above-mentioned plurality of contact points may be arranged on the connecting plate.

Embodiments of the present disclosure may not limit the specific form of the consumable chip.

It should be noted that specific description involved in embodiments of the present disclosure may refer to the description of above-mentioned method embodiments, which may not be described in detail for simplicity.

Corresponding to above-mentioned embodiments, embodiments of the present disclosure may further provides a consumable.

Referring to FIG. 11, FIG. 11 illustrates a structural schematic of a consumable provided by exemplary embodiments of the present disclosure. As shown in FIG. 11, the consumable may include a housing; a developer containing portion which is in the housing and configured for containing the developer; and the consumable chip in above-mentioned embodiments.

Referring to FIG. 12, FIG. 12 illustrates a structural schematic of another consumable provided by exemplary embodiments of the present disclosure. As shown in FIG. 12, the consumable may further include a developer conveying unit for conveying developer based on one embodiment shown in FIG. 11.

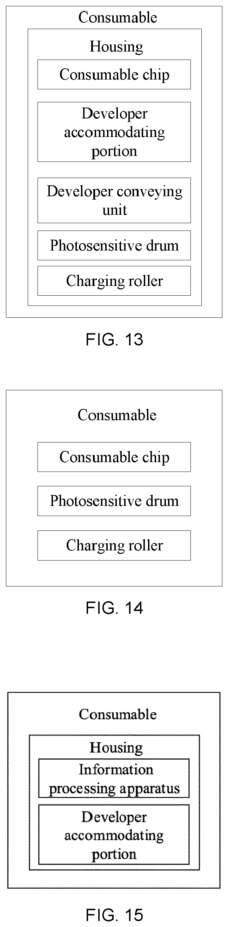

Referring to FIG. 13, FIG. 13 illustrates a structural schematic of another consumable provided by exemplary embodiments of the present disclosure. As shown in FIG. 13, the consumable may further include a photosensitive drum based on one embodiment shown in FIG10; and a charging roller for charging the photosensitive drum.

Referring to FIG. 14, FIG. 14 illustrates a structural schematic of another consumable provided by exemplary embodiments of the present disclosure. As shown in FIG. 14, the consumable may include a photosensitive drum; a charging roller for charging the photosensitive drum; and the consumable chip in above-mentioned embodiments.

It should be noted that specific description of the consumable chip in embodiments shown in FIGS. 9-12 may refer to the description of above-mentioned embodiments, which may not be described in detail for simplicity.

Corresponding to above-mentioned embodiments, embodiments of the present disclosure may further provides an information processing apparatus, wherein the information processing apparatus is capable of communicating with an image-forming apparatus, comprising:
a first receiving module, configured to receive a verification request sent by the image-forming apparatus;
a first output module, configured to send original data and target verification information to the image-forming apparatus based on the verification request, wherein at least partial data in the target verification information is configured to verify the original data;
a second output module, configured to send the first calculation factor to the image-forming apparatus based on the verification request;
a second receiving module, configured to receive first intermediate data generated based on the first calculation factor and sent by the image-forming apparatus; and
a generating module, configured to generate the target verification information based on the first intermediate data, wherein a data length of the target verification information is shorter than a data length of first verification information generated based on the original data according to a preset first algorithm.

In one embodiment, the generating module is configured to process the first intermediate data based on a preset second algorithm to generate second intermediate data.

In one embodiment, the generating module is configured to, based on the first intermediate data, select partial data in the first verification information; and generate the target verification information based on the selected partial data in the first verification information.

In one embodiment, at least a part of the selected partial data in the first verification information matches at least a part of valid bits in the first intermediate data.

In one embodiment, the generating module is configured to generate the target verification information based on the second intermediate data and the first verification information.

In one embodiment, the generating module is configured to, based on the second intermediate data, select partial data in the first verification information; and generate the target verification information based on the selected partial data in the first verification information.

In one embodiment, at least a part of the selected partial data in the first verification information matches at least a part of valid bits in the second intermediate data.

In one embodiment, when the first intermediate data is binary data, the generating module is configured to identify N valid bits in the first intermediate data, wherein N≥1; and set binary bits other than the N valid bits in the first intermediate data as invalid bits to obtain the second intermediate data; or
when the first intermediate data is non-binary data, the generating module is configured to convert the first intermediate data into binary first intermediate data; identify N valid bits in the binary first intermediate data obtained, wherein N≥1; and set binary bits other than the N valid bits in the binary first intermediate data obtained as invalid bits to obtain the second intermediate data.

In one embodiment, when the first intermediate data is binary data, the generating module is configured to identify the N valid bits in the first intermediate data according to an order from left to right or from right to left; and
when the first intermediate data is non-binary data, the generating module is configured to identify the N valid bits in the binary first intermediate data obtained according to an order from left to right or from right to left.

In one embodiment, the N valid bits are binary bits with a value of "1", and the invalid bits are binary bits with a value of "0"; or
the N valid bits are binary bits with a value of "0", and the invalid bits are binary bits with a value of "1".

In one embodiment, the generating module, configured to process the first intermediate data and the first calculation factor according to a fourth algorithm to generate second calculation factor verification data; the information processing apparatus further including: a third output module, configured to send the second calculation factor verification data to the image-forming apparatus, wherein the second calculation factor verification data is configured to determine whether a consumable is abnormal.

In embodiments of the present disclosure, the first receiving module, the first output module, the second receiving module, the second output module,the second receiving module, and the generating module may be implemented using a software manner or a hardware manner.

For example, the first receiving module, the first output module, the second output module, the second receiving module, the third output module and the generating module may be circuit units including devices such as FPGA (field programmable gate array), MCU (microcontroller unit), DSP (digital signal processor) and the like. The first output module the third output module and the second output module may also realize functions by building a specific waveform generator circuit. The first receiving module, the second receiving module and the generating module may also realize corresponding functions by building a digital logic calculator. The specific implementation form of each module may be not further limited in the present disclosure.

In an optional implementation manner, the first receiving module, the first output module, the second output module, the second receiving module, the third output module and the generating module may be all included in above-mentioned consumable chip. Optionally, the first receiving module, the first output module, the second output module, the second receiving module, the third output module and the generating module may be all included in the first controller of above-mentioned consumable chip.

In an optional implementation manner, the first receiving module, the first output module, the second output module, the second receiving module, the third output module and the generating module may be other modules different from the consumable chip and configured on the consumable, which may not be limited in the present disclosure.

In an optional implementation manner, at least one of the first receiving module, the first output module, the second output module, the second receiving module, the third output module and the generating module may be an external module electrically connected to the consumable chip outside the consumable chip; and other units may be built into the first controller of the consumable chip. That is, above-mentioned consumable may include the consumable chip, and the external module electrically connected to the consumable chip.

In an optional implementation manner, the first receiving module, the first output module, the second output module, the second receiving module, the third output module and the generating module may be respectively configured on two or more different consumable chips that can communicate with each other. Optionally, the first receiving module, the first output module, the second output module, the third output module and the second receiving module may be configured on the first consumable chip, and the generating module may be configured on the second consumable chip. After the first receiving module of the first consumable chip receives the verification request sent by the image-forming apparatus, the verification request or the analysis information of the verification request may be sent to the second consumable chip by the first consumable chip, the second consumable chip generates a first calculation factor based on the verification request or the analysis information of the verification request, and sends the first calculation factor to the first consumable chip. The second output module of the first consumable chip may send the first calculation factor to the image-forming apparatus based on the verification request. The second receiving module of the first consumable chip may receive the first intermediate data generated based on the first calculation factor and sent by the image-forming apparatus, and sends the first intermediate data to the second consumable chip. The generating module of the second consumable chip may generate target verification information based on the first intermediate data and send the target verification information to the first consumable chip. The first output module of the first consumable chip may send original data and the target verification information to the image-forming apparatus based on the verification request, wherein the original data can be pre-stored in the first consumable chip.

Obviously, those skilled in the art may also set the first receiving module, the first output module, the second output module, the second receiving module, the third output module and the generating module on different consumable chips by other manners, which may not be limited in the present disclosure.

It should be noted that in embodiments of the present disclosure, the target verification information, the second intermediate data and the second calculation factor verification data may all be used by the image-forming apparatus to verify the consumable, that is, to determine whether the consumable is abnormal. Specific contents of how the target verification information, the second intermediate data and the second calculation factor verification data are used by the image-forming apparatus to verify the consumable may refer to above description, which may not be described in detail for simplicity. In practical applications, for example, when the modules of the information processing apparatus are all included in above-mentioned consumable chip, the target verification information, the second intermediate data, and the second calculation factor verification data may be generated by the above-mentioned consumable chip and sent to the image-forming apparatus. For example, when the first output module, the second output module and the third output module of the information processing device are configured on the first consumable chip and when the generating module is configured on the second consumable chip, the target verification information, the second intermediate data and the second calculation factor verification data may be generated by the second consumable chip and sent by the first consumable chip to the image-forming apparatus. The target verification information sent by the information processing apparatus is used by the image-forming apparatus to compare with the generated reference verification information, determining whether they are consistent. If there is any inconsistency, the image-forming apparatus determines that that the consumable is abnormal. If they are consistent, the image-forming apparatus determines that the consumable is normal. The second intermediate data sent by the information processing apparatus or integrated into the target verification information is used by the image-forming apparatus to compare with the aforementioned third intermediate data, assessing their consistency. If they are not consistent, the image-forming apparatus determines that the consumable is abnormal. If they are consistent, the image-forming apparatus determines that the consumable is normal. The second calculation factor verification data transmitted by the information processing apparatus is used by the image-forming apparatus to compare with the aforementioned second calculation factor, evaluating their consistency. If they are not consistent, the image-forming apparatus determines that the consumable is abnormal. If they are consistent, the image-forming apparatus determines that the consumable is normal. Furthermore, if the first receiving module, the first output module, the second output module, the second receiving module, the third output module and the generating module are at least partially installed within the aforementioned consumable chip, the target verification information, the second intermediate data, and the second calculation factor verification data may also be separately used by the image-forming apparatus to verify the consumable chip, so as to determine whether the consumable chip is abnormal. The content of the image-forming apparatus verifying the consumable chip to determine whether the consumable chip is abnormal can be specifically referred to in this section, in which the image-forming apparatus determines whether the consumable is normal based on the the target verification information, the second intermediate data, and the second calculation factor verification data.It should be noted that specific contents involved in embodiments of the present application may refer to above description, which may not be described in detail for simplicity.

Corresponding to above-mentioned embodiments, embodiments of the present disclosure may further provides a data verification method, the data verification method is applied to the consumable chip or the information processing apparatus described in the above embodiment. comprising:
receiving a verification request sent by an image-forming apparatus;
sending a first calculation factor to the image-forming apparatus based on the verification request;
receiving first intermediate data generated based on the first calculation factor and sent by the image-forming apparatus;
generating target verification information based on the first intermediate data, wherein a data length of the target verification information is shorter than a data length of first verification information generated based on original data according to a preset first algorithm; and
sending the original data and the target verification information to the image-forming apparatus based on the verification request, wherein at least partial data in the target verification information is configured to verify the original data.

In one embodiment, the method according to claim 1, further including:
processing the first intermediate data based on a preset second algorithm to generate second intermediate data.

In one embodiment, wherein generating the target verification information based on the first intermediate data and the first verification information includes:
based on the first intermediate data, selecting partial data in the first verification information; and
generating the target verification information based on the selected partial data in the first verification information.

In one embodiment, at least a part of the selected partial data in the first verification information matches at least a part of valid bits in the first intermediate data.

In one embodiment, wherein generating the target verification information based on the first intermediate data and the first verification information includes:
generating the target verification information based on the second intermediate data and the first verification information.

In one embodiment, wherein generating the target verification information based on the second intermediate data and the first verification information includes:
based on the second intermediate data, selecting partial data in the first verification information; and
generating the target verification information based on selected partial data in the first verification information.

In one embodiment, at least a part of the selected partial data in the first verification information matches at least a part of valid bits in the second intermediate data.

In one embodiment, when the first intermediate data is binary data, processing the first intermediate data based on the preset second algorithm to generate the second intermediate data includes identifying N valid bits in the first intermediate data, wherein N≥1; and setting binary bits other than the N valid bits in the first intermediate data as invalid bits to obtain the second intermediate data; or
when the first intermediate data is non-binary data, processing the first intermediate data based on the preset second algorithm to generate the second intermediate data includes converting the first intermediate data into binary first intermediate data; identifying N valid bits in the binary first intermediate data obtained, wherein N≥1; and setting binary bits other than the N valid bits in the binary first intermediate data obtained as invalid bits to obtain the second intermediate data.

In one embodiment, when the first intermediate data is binary data, identifying the N valid bits in the first intermediate data includes identifying the N valid bits in the first intermediate data according to an order from left to right or from right to left; and
when the first intermediate data is non-binary data, identifying the N valid bits in the first intermediate data includes identifying the N valid bits in the binary first intermediate data obtained according to an order from left to right or from right to left.

In one embodiment, the N valid bits are binary bits with a value of "1", and the invalid bits are binary bits with a value of "0"; or
the N valid bits are binary bits with a value of "0", and the invalid bits are binary bits with a value of "1".

In one embodiment, after receiving the first intermediate data generated based on the first calculation factor and sent by the image-forming apparatus, further including:
processing the first intermediate data and the first calculation factor according to a fourth algorithm to generate second calculation factor verification data; and
sending the second calculation factor verification data to the image-forming apparatus, wherein the second calculation factor verification data is configured to determine whether a consumable is abnormal.

Corresponding to above-mentioned embodiments, embodiments of the present disclosure may further provides a consumable.

Referring to FIG. 15, FIG. 15 illustrates a structural schematic of a consumable provided by exemplary embodiments of the present disclosure. As shown in FIG. 15, the consumable may include a housing; a developer containing portion which is in the housing and configured for containing the developer; and the information processing apparatus in above-mentioned embodiments.

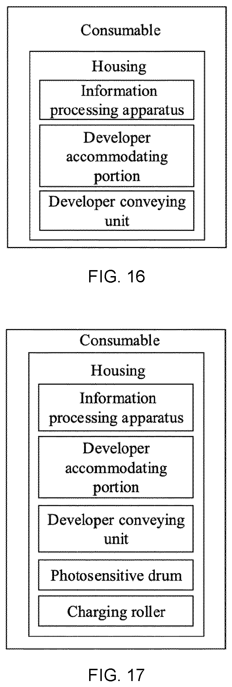

Referring to FIG. 16, FIG. 16 illustrates a structural schematic of another consumable provided by exemplary embodiments of the present disclosure. As shown in FIG. 16, the consumable may further include a developer conveying unit for conveying developer based on one embodiment shown in FIG. 15.

Referring to FIG. 17, FIG. 17 illustrates a structural schematic of another consumable provided by exemplary embodiments of the present disclosure. As shown in FIG. 17, the consumable may further include a photosensitive drum based on one embodiment shown in FIG16; and a charging roller for charging the photosensitive drum.

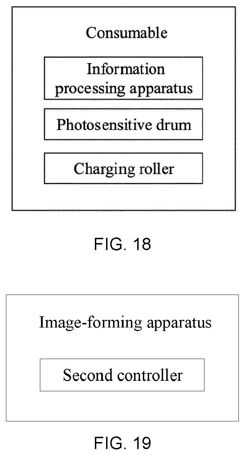

Referring to FIG. 18, FIG. 18 illustrates a structural schematic of another consumable provided by exemplary embodiments of the present disclosure. As shown in FIG. 18, the consumable may include a photosensitive drum; a charging roller for charging the photosensitive drum; and the information processing apparatus in above-mentioned embodiments.

It should be noted that specific description of the consumable chip in embodiments shown in FIGS. 15-18 may refer to the description of above-mentioned embodiments, which may not be described in detail for simplicity.

Corresponding to above-mentioned embodiments, embodiments of the present disclosure may further provide an image-forming apparatus.

Referring to FIG. 19, FIG. 19 illustrates a structural block diagram of an image-forming apparatus provided by exemplary embodiments of the present disclosure. As shown in FIG. 19, the image-forming apparatus may include the second controller, which may be configured to execute part or all of the methods in above-mentioned method embodiments.

It should be noted that specific description in embodiments of the present disclosure may refer to the description of above-mentioned embodiments, which may not be described in detail for simplicity.

Corresponding to above-mentioned embodiments, embodiments of the present disclosure may further provide an image-forming system. The image-forming system may include the consumables and the image-forming apparatus in above-mentioned embodiments. Above-mentioned image-forming apparatus and above-mentioned consumable chip may be in communication connection.

It should be noted that specific description in embodiments of the present disclosure may refer to the description of above-mentioned embodiments, which may not be described in detail for simplicity.

Corresponding to above-mentioned embodiments, embodiments of the present disclosure may further provide a computer-readable storage medium, where the computer-readable storage medium may store a program. When the program is executed, the device where the computer-readable storage medium is located may be controlled to perform some or all of steps in above-mentioned method embodiments. In an implementation, the computer-readable storage medium may be a magnetic disk, an optical disk, a read-only memory (ROM), a random access memory (RAM), and/or the like.

Corresponding to above-mentioned embodiments, embodiments of the present disclosure may further provide a computer program product. The computer program product may include an executable instruction. When the executable instruction is executed on the computer, the computer may be configured to perform some or all of steps in above-mentioned method embodiments.

In embodiments of the present disclosure, "at least one" refers to one or more; and "a plurality of" refers to two or more. "And/or" describes the relationship between associated objects, indicating that there may be three relationships. For example, A and/or B may represent A alone, both A and B, or B alone. A and B may be singular or plural. The character "/" indicates that related objects are in an "or" relationship. "At least one of the following items" and similar expressions refer to any combination of these items, including any combination of single or plural items. For example, at least one of a, b and c may represent: a, b, c, a-b, a-c, b-c, or a-b-c, where a, b and c are single or multiple.

Those skilled in the art may realize that each unit and algorithm step described in embodiments disclosed herein may be implemented by electronic hardware, computer software, or a combination of computer software and electronic hardware. Whether these functions are performed in hardware or software depends on specific application and design constraints of technical solutions. Those skilled in the art may implement described functionality using different manners for each specific application, but such implementations should not be considered beyond the scope of the present disclosure.

Those skilled in the art may clearly understand that for the convenience and simplicity of description, specific working processes of the system, apparatus and unit described above may refer to corresponding processes in above-mentioned method embodiments, which not be described in detail herein.

In some embodiments provided in the present disclosure, if any function is implemented in the form of a software functional unit and sold or used as an independent product, it may be stored in a computer-readable storage medium. According to such understanding, essential part of the technical solution of the present disclosure or a part that contributes to the existing technology or a part of the technical solution may be embodied in the form of a software product. The computer software product may be stored in a storage medium and include multiple instructions to cause a computer device (which may be a personal computer, a server, a network device or the like) to execute all or part of steps of the methods described in various embodiments of the present disclosure. Above-mentioned storage media may include various media that may store program code, including U disks, mobile hard disks, read-only memory (ROM), random access memory (RAM), magnetic disks, optical disks and/or the like.

## Claims

1. A data verification method executed at an information processing apparatus to enable verification, at an image forming apparatus (200), of original data of the information processing apparatus, **characterized in that** the method comprises:
receiving a verification request sent by the image-forming apparatus (200);
sending a first calculation factor to the image-forming apparatus (200) based on the verification request;
receiving first intermediate data generated based on the first calculation factor and sent by the image-forming apparatus (200);
using said first intermediate data, selecting partial data from first verification information generated based on the original data according to a preset first algorithm;
generating target verification information based on the selected partial data, wherein a data length of the target verification information is shorter than a data length of the first verification information;
wherein at least partial data in the target verification information is usable by the image forming apparatus (200) to verify the original data;
sending original data and target verification information to the image-forming apparatus (200) based on the verification request.

2. The method according to claim 1, further including:
processing the first intermediate data based on a preset second algorithm to generate second intermediate data.

3. The method according to claim 1 or 2, wherein:
the selected partial data is generated directly based on the first intermediate data or indirectly based on the first intermediate data, at least a part of the selected partial data in the first verification information matches at least a part of valid bits in the first intermediate data.

4. The method according to claim 2, wherein using said first intermediate data, selecting partial data from first verification information includes:
based on the second intermediate data, selecting partial data in the first verification information; wherein:
at least a part of the selected partial data in the first verification information matches at least a part of valid bits in the second intermediate data.

5. The method according to claim 2, wherein:
when the first intermediate data is binary data, processing the first intermediate data based on the preset second algorithm to generate the second intermediate data includes identifying the N valid bits in the first intermediate data according to an order from left to right or from right to left, wherein N≥1; and setting binary bits other than the N valid bits in the first intermediate data as invalid bits to obtain the second intermediate data; or
when the first intermediate data is non-binary data, processing the first intermediate data based on the preset second algorithm to generate the second intermediate data includes converting the first intermediate data into binary first intermediate data; identifying the N valid bits in the binary first intermediate data obtained according to an order from left to right or from right to left., wherein N≥1; and setting binary bits other than the N valid bits in the binary first intermediate data obtained as invalid bits to obtain the second intermediate data , wherein:
the N valid bits are binary bits with a value of "1", and the invalid bits are binary bits with a value of "0"; or
the N valid bits are binary bits with a value of "0", and the invalid bits are binary bits with a value of "1".

6. The method according to any one of claims 1 to 5, including:
after receiving the first intermediate data generated based on the first calculation factor and sent by the image-forming apparatus (200),
processing the first intermediate data and the first calculation factor according to a fourth algorithm to generate second calculation factor verification data; and
sending the second calculation factor verification data to the image-forming apparatus (200), wherein the second calculation factor verification data is configured to determine whether a consumable (1, 2, 3, 4) is abnormal.

7. An information processing apparatus to enable verification, at an image forming apparatus (200), of original data of the information processing apparatus, wherein the information processing apparatus is configured for communicating with an image-forming apparatus (200), the image-forming apparatus (200) being detachably installed with a consumable (1, 2, 3, 4), the information processing apparatus **characterized by** comprising:
a first receiving module, configured to receive a verification request sent by the image-forming apparatus (200);
a second output module, configured to send a first calculation factor to the image-forming apparatus (200) based on the verification request;
a second receiving module, configured to receive first intermediate data generated based on the first calculation factor and sent by the image-forming apparatus (200); and
a generating module, configured to, by using said first intermediate data, selecting partial data from first verification information generated based on the original data according to a preset first algorithm, generate target verification information based on the selected partial data, wherein a data length of the target verification information is shorter than a data length of the first verification information;
wherein at least partial data in the target verification information is usable by the image forming apparatus (200) to verify the original data; and
a first output module, configured to send original data and target verification information to the image-forming apparatus (200) based on the verification request.

8. The information processing apparatus according to claim 7, wherein:
the generating module is configured to process the first intermediate data based on a preset second algorithm to generate second intermediate data.

9. The information processing apparatus according to claim 7 or 8, wherein:
the selected partial data is generated directly based on the first intermediate data or indirectly based on the first intermediate data;
at least a part of the selected partial data in the first verification information matches at least a part of valid bits in the first intermediate data.

10. The information processing apparatus according to claim 8, wherein:
the generating module is configured to, based on the second intermediate data, select partial data in the first verification information; and generate the target verification information based on the selected partial data in the first verification information , wherein:
at least a part of the selected partial data in the first verification information matches at least a part of valid bits in the second intermediate data.

11. The information processing apparatus according to claim 8, wherein:
when the first intermediate data is binary data, the generating module is configured to identify N valid bits in the first intermediate data according to an order from left to right or from right to left, wherein N≥1; and set binary bits other than the N valid bits in the first intermediate data as invalid bits to obtain the second intermediate data; or
when the first intermediate data is non-binary data, the generating module is configured to convert the first intermediate data into binary first intermediate data; identify N valid bits in the binary first intermediate data obtained according to an order from left to right or from right to left., wherein N≥1; and setting binary bits other than the N valid bits in the binary first intermediate data obtained as invalid bits to obtain the second intermediate data , wherein:
the N valid bits are binary bits with a value of "1", and the invalid bits are binary bits with a value of "0"; or
the N valid bits are binary bits with a value of "0", and the invalid bits are binary bits with a value of "1".

12. The information processing apparatus according to any one of claims 7 to 11, wherein:
the generating module is configured to process the first intermediate data and the first calculation factor according to a fourth algorithm to generate a second calculation factor verification data; and send the second calculation factor verification data to the image-forming apparatus (200), wherein the second calculation factor verification data is configured to determine whether the consumable (1, 2, 3, 4) is abnormal.

13. A consumable (1, 2, 3, 4), comprising:
a housing;
a developer accommodating portion (11) in the housing and configured for containing a developer; and
an information processing apparatus according to any one of claims 7 to 12.

14. The consumable (1, 2, 3, 4) according to claim 13, further including:
a developer conveying unit (13) for conveying the developer.

15. The consumable (1, 2, 3, 4) according to claim 14, further including:
a photosensitive drum (14); and
a charging roller for charging the photosensitive drum (14).

16. A consumable (1, 2, 3, 4), comprising:
a photosensitive drum (14);
a charging roller for charging the photosensitive drum (14); and
an information processing apparatus according to any one of claims 7 to 12.

## Patentansprüche

1. Datenverifizierungsverfahren, das an einer Informationsverarbeitungsvorrichtung ausgeführt wird, um eine Verifizierung von Originaldaten der Informationsverarbeitungsvorrichtung an einer Bildbildungsvorrichtung (200) zu ermöglichen, **dadurch gekennzeichnet, dass** das Verfahren umfasst:
Empfangen einer von der Bildbildungsvorrichtung (200) gesendeten Verifizierungsanforderung;
Senden eines ersten Berechnungsfaktors an die Bildbildungsvorrichtung (200) auf der Grundlage der Verifizierungsanforderung;
Empfangen erster Zwischendaten, die auf der Grundlage des ersten Berechnungsfaktors erzeugt und von der Bildbildungsvorrichtung (200) gesendet werden;
unter Verwendung der ersten Zwischendaten, Auswählen von Teildaten aus einer auf der Grundlage der Originaldaten erzeugten ersten Verifizierungsinformation gemäß einem voreingestellten ersten Algorithmus;
Erzeugen einer Zielverifizierungsinformation auf der Grundlage der ausgewählten Teildaten, wobei eine Datenlänge der Zielverifizierungsinformation kürzer ist als eine Datenlänge der ersten Verifizierungsinformation;
wobei zumindest Teildaten in der Zielverifizierungsinformation von der Bildbildungsvorrichtung (200) verwendbar sind, um die Originaldaten zu verifizieren;
Senden von Originaldaten und der Zielverifizierungsinformation an die Bildbildungsvorrichtung (200) auf der Grundlage der Verifizierungsanforderung.

2. Verfahren nach Anspruch 1, ferner umfassend:
Verarbeiten der ersten Zwischendaten auf der Grundlage eines voreingestellten zweiten Algorithmus, um zweite Zwischendaten zu erzeugen.

3. Verfahren nach Anspruch 1 oder 2, wobei:
die ausgewählten Teildaten direkt auf der Grundlage der ersten Zwischendaten oder indirekt auf der Grundlage der ersten Zwischendaten erzeugt werden, wobei zumindest ein Teil der ausgewählten Teildaten in der ersten Verifizierungsinformation zumindest mit einem Teil gültiger Bits in den ersten Zwischendaten übereinstimmt.

4. Verfahren nach Anspruch 2, wobei das Auswählen von Teildaten aus einer ersten Verifizierungsinformation unter Verwendung der ersten Zwischendaten umfasst:
auf der Grundlage der zweiten Zwischendaten, Auswählen von Teildaten in der ersten Verifizierungsinformation; wobei:
zumindest ein Teil der ausgewählten Teildaten in der ersten Verifizierungsinformation zumindest mit einem Teil gültiger Bits in den zweiten Zwischendaten übereinstimmt.

5. Verfahren nach Anspruch 2, wobei:
wenn die ersten Zwischendaten Binärdaten sind, das Verarbeiten der ersten Zwischendaten auf der Grundlage des voreingestellten zweiten Algorithmus zum Erzeugen der zweiten Zwischendaten umfasst, die N gültigen Bits in den ersten Zwischendaten gemäß einer Reihenfolge von links nach rechts oder von rechts nach links zu identifizieren, wobei N≥1; und binäre Bits außer den N gültigen Bits in den ersten Zwischendaten als ungültige Bits zu setzen, um die zweiten Zwischendaten zu erhalten; oder
wenn die ersten Zwischendaten keine Binärdaten sind, das Verarbeiten der ersten Zwischendaten auf der Grundlage des voreingestellten zweiten Algorithmus zum Erzeugen der zweiten Zwischendaten umfasst, die ersten Zwischendaten in binäre erste Zwischendaten umzuwandeln; die N gültigen Bits in den erhaltenen binären ersten Zwischendaten gemäß einer Reihenfolge von links nach rechts oder von rechts nach links zu identifizieren, wobei N≥1; und binäre Bits außer den N gültigen Bits in den erhaltenen binären ersten Zwischendaten als ungültige Bits zu setzen, um die zweiten Zwischendaten zu erhalten, wobei:
die N gültigen Bits Binärbits mit einem Wert von "1" sind, und die ungültigen Bits Binärbits mit einem Wert von "0" sind; oder
die N gültigen Bits Binärbits mit einem Wert von "0" sind, und die ungültigen Bits Binärbits mit einem Wert von "1" sind.

6. Verfahren nach einem der Ansprüche 1 bis 5, umfassend:
nach dem Empfangen der ersten Zwischendaten, die auf der Grundlage des ersten Berechnungsfaktors erzeugt und von der Bildbildungsvorrichtung (200) gesendet werden,
Verarbeiten der ersten Zwischendaten und des ersten Berechnungsfaktors gemäß einem vierten Algorithmus, um zweite Berechnungsfaktor-Verifizierungsdaten zu erzeugen; und
Senden der zweiten Berechnungsfaktor-Verifizierungsdaten an die Bildbildungsvorrichtung (200), wobei die zweiten Berechnungsfaktor-Verifizierungsdaten dazu ausgebildet sind, zu bestimmen, ob ein Verbrauchsmaterial (1, 2, 3, 4) abnormal ist.

7. Informationsverarbeitungsvorrichtung, um eine Verifizierung von Originaldaten der Informationsverarbeitungsvorrichtung an einer Bildbildungsvorrichtung (200) zu ermöglichen, wobei die Informationsverarbeitungsvorrichtung dazu ausgebildet ist, mit einer Bildbildungsvorrichtung (200) zu kommunizieren, wobei an der Bildbildungsvorrichtung (200) ein Verbrauchsmaterial (1, 2, 3, 4) lösbar installiert ist, wobei die Informationsverarbeitungsvorrichtung **dadurch gekennzeichnet ist, dass** sie umfasst:
ein erstes Empfangsmodul, das dazu ausgebildet ist, eine von der Bildbildungsvorrichtung (200) gesendete Verifizierungsanforderung zu empfangen;
ein zweites Ausgabemodul, das dazu ausgebildet ist, einen ersten Berechnungsfaktor an die Bildbildungsvorrichtung (200) auf der Grundlage der Verifizierungsanforderung zu senden;
ein zweites Empfangsmodul, das dazu ausgebildet ist, erste Zwischendaten zu empfangen, die auf der Grundlage des ersten Berechnungsfaktors erzeugt und von der Bildbildungsvorrichtung (200) gesendet werden; und
ein Erzeugungsmodul, das dazu ausgebildet ist, unter Verwendung der ersten Zwischendaten Teildaten aus einer auf der Grundlage der Originaldaten erzeugten ersten Verifizierungsinformation gemäß einem voreingestellten ersten Algorithmus auszuwählen, und auf der Grundlage der ausgewählten Teildaten eine Zielverifizierungsinformation zu erzeugen, wobei eine Datenlänge der Zielverifizierungsinformation kürzer ist als eine Datenlänge der ersten Verifizierungsinformation;
wobei zumindest Teildaten in der Zielverifizierungsinformation von der Bildbildungsvorrichtung (200) verwendbar sind, um die Originaldaten zu verifizieren; und
ein erstes Ausgabemodul, das dazu ausgebildet ist, Originaldaten und die Zielverifizierungsinformation an die Bildbildungsvorrichtung (200) auf der Grundlage der Verifizierungsanforderung zu senden.

8. Informationsverarbeitungsvorrichtung nach Anspruch 7, wobei:
das Erzeugungsmodul dazu ausgebildet ist, die ersten Zwischendaten auf der Grundlage eines voreingestellten zweiten Algorithmus zu verarbeiten, um zweite Zwischendaten zu erzeugen.

9. Informationsverarbeitungsvorrichtung nach Anspruch 7 oder 8, wobei:
die ausgewählten Teildaten direkt auf der Grundlage der ersten Zwischendaten oder indirekt auf der Grundlage der ersten Zwischendaten erzeugt werden;
zumindest ein Teil der ausgewählten Teildaten in der ersten Verifizierungsinformation zumindest mit einem Teil gültiger Bits in den ersten Zwischendaten übereinstimmt.

10. Informationsverarbeitungsvorrichtung nach Anspruch 8, wobei:
das Erzeugungsmodul dazu ausgebildet ist, auf der Grundlage der zweiten Zwischendaten Teildaten in der ersten Verifizierungsinformation auszuwählen; und die Zielverifizierungsinformation auf der Grundlage der ausgewählten Teildaten in der ersten Verifizierungsinformation zu erzeugen, wobei:
zumindest ein Teil der ausgewählten Teildaten in der ersten Verifizierungsinformation zumindest mit einem Teil gültiger Bits in den zweiten Zwischendaten übereinstimmt.

11. Informationsverarbeitungsvorrichtung nach Anspruch 8, wobei:
wenn die ersten Zwischendaten Binärdaten sind, das Erzeugungsmodul dazu ausgebildet ist, N gültige Bits in den ersten Zwischendaten gemäß einer Reihenfolge von links nach rechts oder von rechts nach links zu identifizieren, wobei N≥1; und binäre Bits außer den N gültigen Bits in den ersten Zwischendaten als ungültige Bits zu setzen, um die zweiten Zwischendaten zu erhalten; oder
wenn die ersten Zwischendaten keine Binärdaten sind, das Erzeugungsmodul dazu ausgebildet ist, die ersten Zwischendaten in binäre erste Zwischendaten umzuwandeln; N gültige Bits in den erhaltenen binären ersten Zwischendaten gemäß einer Reihenfolge von links nach rechts oder von rechts nach links zu identifizieren, wobei N≥1; und binäre Bits außer den N gültigen Bits in den erhaltenen binären ersten Zwischendaten als ungültige Bits zu setzen, um die zweiten Zwischendaten zu erhalten, wobei:
die N gültigen Bits Binärbits mit einem Wert von "1" sind, und die ungültigen Bits Binärbits mit einem Wert von "0" sind; oder
die N gültigen Bits Binärbits mit einem Wert von "0" sind, und die ungültigen Bits Binärbits mit einem Wert von "1" sind.

12. Informationsverarbeitungsvorrichtung nach einem der Ansprüche 7 bis 11, wobei:
das Erzeugungsmodul dazu ausgebildet ist, die ersten Zwischendaten und den ersten Berechnungsfaktor gemäß einem vierten Algorithmus zu verarbeiten, um zweite Berechnungsfaktor-Verifizierungsdaten zu erzeugen; und die zweiten Berechnungsfaktor-Verifizierungsdaten an die Bildbildungsvorrichtung (200) zu senden, wobei die zweiten Berechnungsfaktor-Verifizierungsdaten dazu ausgebildet sind, zu bestimmen, ob das Verbrauchsmaterial (1, 2, 3, 4) abnormal ist.

13. Verbrauchsmaterial (1, 2, 3, 4), umfassend:
ein Gehäuse;
einen Entwickler aufnehmenden Abschnitt (11) in dem Gehäuse, der dazu ausgebildet ist, einen Entwickler aufzunehmen; und
eine Informationsverarbeitungsvorrichtung nach einem der Ansprüche 7 bis 12.

14. Verbrauchsmaterial (1, 2, 3, 4) nach Anspruch 13, ferner umfassend:
eine Entwicklerfördereinheit (13) zum Fördern des Entwicklers.

15. Verbrauchsmaterial (1, 2, 3, 4) nach Anspruch 14, ferner umfassend:
eine Photoleitertrommel (14); und
eine Ladewalze zum Laden der Photoleitertrommel (14).

16. Verbrauchsmaterial (1, 2, 3, 4), umfassend:
eine Photoleitertrommel (14);
eine Ladewalze zum Laden der Photoleitertrommel (14); und
eine Informationsverarbeitungsvorrichtung nach irgendeinem der Ansprüche 7 bis 12.

## Revendications

1. Procédé de vérification de données exécuté au niveau d'un appareil de traitement d'informations pour permettre une vérification, au niveau d'un appareil de formation d'image (200), de données originales de l'appareil de traitement d'informations, **caractérisé en ce que** le procédé comprend :
la réception d'une demande de vérification envoyée par l'appareil de formation d'image (200) ;
l'envoi d'un premier facteur de calcul à l'appareil de formation d'image (200) sur la base de la demande de vérification ;
la réception de premières données intermédiaires générées sur la base du premier facteur de calcul et envoyées par l'appareil de formation d'image (200) ;
en utilisant lesdites premières données intermédiaires, la sélection de données partielles à partir de premières informations de vérification générées sur la base des données originales selon un premier algorithme prédéfini ;
la génération d'informations de vérification cibles sur la base des données partielles sélectionnées, dans laquelle une longueur de données des informations de vérification cibles est inférieure à une longueur de données des premières informations de vérification ;
dans lequel au moins des données partielles dans les informations de vérification cibles sont utilisables par l'appareil de formation d'image (200) pour vérifier les données originales ;
l'envoi des données originales et des informations de vérification cibles à l'appareil de formation d'image (200) sur la base de la demande de vérification.

2. Procédé selon la revendication 1, comprenant en outre :
le traitement des premières données intermédiaires sur la base d'un deuxième algorithme prédéfini pour générer de secondes données intermédiaires.

3. Procédé selon la revendication 1 ou 2, dans lequel :
les données partielles sélectionnées sont générées directement sur la base des premières données intermédiaires ou indirectement sur la base des premières données intermédiaires, au moins une partie des données partielles sélectionnées dans les premières informations de vérification correspondant à au moins une partie de bits valides dans les premières données intermédiaires.

4. Procédé selon la revendication 2, dans lequel, en utilisant lesdites premières données intermédiaires, la sélection de données partielles à partir de premières informations de vérification comprend :
sur la base des secondes données intermédiaires, la sélection de données partielles dans les premières informations de vérification ; dans lequel :
au moins une partie des données partielles sélectionnées dans les premières informations de vérification correspond à au moins une partie de bits valides dans les secondes données intermédiaires.

5. Procédé selon la revendication 2, dans lequel :
lorsque les premières données intermédiaires sont des données binaires, le traitement des premières données intermédiaires sur la base du deuxième algorithme prédéfini pour générer les secondes données intermédiaires comprend l'identification des N bits valides dans les premières données intermédiaires selon un ordre de gauche à droite ou de droite à gauche, dans lequel N≥1 ; et la définition, comme bits invalides, des bits binaires autres que les N bits valides dans les premières données intermédiaires afin d'obtenir les secondes données intermédiaires ; ou
lorsque les premières données intermédiaires sont des données non binaires, le traitement des premières données intermédiaires sur la base du deuxième algorithme prédéfini pour générer les secondes données intermédiaires comprend la conversion des premières données intermédiaires en premières données intermédiaires binaires ; l'identification des N bits valides dans les premières données intermédiaires binaires obtenues selon un ordre de gauche à droite ou de droite à gauche, dans lequel N≥1 ; et la définition, comme bits invalides, des bits binaires autres que les N bits valides dans les premières données intermédiaires binaires obtenues afin d'obtenir les secondes données intermédiaires, dans lequel :
les N bits valides sont des bits binaires ayant une valeur de « 1 », et les bits invalides sont des bits binaires ayant une valeur de « 0 » ; ou
les N bits valides sont des bits binaires ayant une valeur de « 0 », et les bits invalides sont des bits binaires ayant une valeur de « 1 ».

6. Procédé selon l'une quelconque des revendications 1 à 5, comprenant :
après réception des premières données intermédiaires générées sur la base du premier facteur de calcul et envoyées par l'appareil de formation d'image (200),
le traitement des premières données intermédiaires et du premier facteur de calcul selon un quatrième algorithme pour générer de secondes données de vérification de facteur de calcul ; et
l'envoi des secondes données de vérification de facteur de calcul à l'appareil de formation d'image (200), dans lequel les secondes données de vérification de facteur de calcul sont configurées pour déterminer si un consommable (1, 2, 3, 4) est anormal.

7. Appareil de traitement d'informations pour permettre une vérification, au niveau d'un appareil de formation d'image (200), de données originales de l'appareil de traitement d'informations, dans lequel l'appareil de traitement d'informations est configuré pour communiquer avec un appareil de formation d'image (200), l'appareil de formation d'image (200) étant équipé de manière détachable d'un consommable (1, 2, 3, 4), l'appareil de traitement d'informations étant **caractérisé par le fait qu'**il comprend :
un premier module de réception configuré pour recevoir une demande de vérification envoyée par l'appareil de formation d'image (200) ;
un deuxième module de sortie configuré pour envoyer un premier facteur de calcul à l'appareil de formation d'image (200) sur la base de la demande de vérification ;
un deuxième module de réception configuré pour recevoir de premières données intermédiaires générées sur la base du premier facteur de calcul et envoyées par l'appareil de formation d'image (200) ; et
un module de génération, configuré pour, en utilisant lesdites premières données intermédiaires, sélectionner des données partielles à partir de premières informations de vérification générées sur la base des données originales selon un premier algorithme prédéfini, générer des informations de vérification cibles sur la base des données partielles sélectionnées, dans lequel une longueur de données des informations de vérification cibles est inférieure à une longueur de données des premières informations de vérification ;
dans lequel au moins des données partielles dans les informations de vérification cibles sont utilisables par l'appareil de formation d'image (200) pour vérifier les données originales ; et
un premier module de sortie, configuré pour envoyer les données originales et les informations de vérification cibles à l'appareil de formation d'image (200) sur la base de la demande de vérification.

8. Appareil de traitement d'informations selon la revendication 7, dans lequel :
le module de génération est configuré pour traiter les premières données intermédiaires sur la base d'un deuxième algorithme prédéfini afin de générer de secondes données intermédiaires.

9. Appareil de traitement d'informations selon la revendication 7 ou 8, dans lequel :
les données partielles sélectionnées sont générées directement sur la base des premières données intermédiaires ou indirectement sur la base des premières données intermédiaires ;
au moins une partie des données partielles sélectionnées dans les premières informations de vérification correspond à au moins une partie de bits valides dans les premières données intermédiaires.

10. Appareil de traitement d'informations selon la revendication 8, dans lequel :
le module de génération est configuré pour, sur la base des secondes données intermédiaires, sélectionner des données partielles dans les premières informations de vérification ; et générer les informations de vérification cibles sur la base des données partielles sélectionnées dans les premières informations de vérification, dans lequel :
au moins une partie des données partielles sélectionnées dans les premières informations de vérification correspond à au moins une partie de bits valides dans les secondes données intermédiaires.

11. Appareil de traitement d'informations selon la revendication 8, dans lequel :
lorsque les premières données intermédiaires sont des données binaires, le module de génération est configuré pour identifier N bits valides dans les premières données intermédiaires selon un ordre de gauche à droite ou de droite à gauche, dans lequel N≥1 ; et définir, comme bits invalides, des bits binaires autres que les N bits valides dans les premières données intermédiaires afin d'obtenir les secondes données intermédiaires ; ou
lorsque les premières données intermédiaires sont des données non binaires, le module de génération est configuré pour convertir les premières données intermédiaires en premières données intermédiaires binaires ; identifier N bits valides dans les premières données intermédiaires binaires obtenues selon un ordre de gauche à droite ou de droite à gauche, dans lequel N≥1 ; et définir, comme bits invalides, des bits binaires autres que les N bits valides dans les premières données intermédiaires binaires obtenues afin d'obtenir les secondes données intermédiaires, dans lequel :
les N bits valides sont des bits binaires ayant une valeur de « 1 », et les bits invalides sont des bits binaires ayant une valeur de « 0 » ; ou
les N bits valides sont des bits binaires ayant une valeur de « 0 », et les bits invalides sont des bits binaires ayant une valeur de « 1 ».

12. Appareil de traitement d'informations selon l'une quelconque des revendications 7 à 11, dans lequel :
le module de génération est configuré pour traiter les premières données intermédiaires et le premier facteur de calcul selon un quatrième algorithme afin de générer de secondes données de vérification de facteur de calcul ; et envoyer les secondes données de vérification de facteur de calcul à l'appareil de formation d'image (200), dans lequel les secondes données de vérification de facteur de calcul sont configurées pour déterminer si le consommable (1, 2, 3, 4) est anormal.

13. Consommable (1, 2, 3, 4), comprenant :
un boîtier ;
une portion de logement de révélateur (11) dans le boîtier et configurée pour contenir un révélateur ; et
un appareil de traitement d'informations selon l'une quelconque des revendications 7 à 12.

14. Consommable (1, 2, 3, 4) selon la revendication 13, comprenant en outre :
une unité de transport de révélateur (13) destinée à transporter le révélateur.

15. Consommable (1, 2, 3, 4) selon la revendication 14, comprenant en outre :
un tambour photosensible (14) ; et
un rouleau de charge destiné à charger le tambour photosensible (14).

16. Consommable (1, 2, 3, 4), comprenant :
un tambour photosensible (14) ;
un rouleau de charge destiné à charger le tambour photosensible (14) ; et
un appareil de traitement d'informations selon l'une quelconque des revendications 7 à 12.
